# EUROPEAN PATENT APPLICATION

(11) **EP 1 170 943 A1**
(43) Date of publication of application: **09.01.2002**
(21) Application number: 00901908.4
(22) Date of filing: 26.01.2000
(51) Int. Cl.: H04N 5/38, H04N 5/44

(54) **TRANSMISSION METHOD AND RECEPTION METHOD FOR IMAGE INFORMATION, TRANSMISSION DEVICE AND RECEPTION DEVICE AND TRANSMISSION/RECEPTION METHOD AND TRANSMISSION/RECEPTION SYSTEM, AND INFORMATION RECORDING MEDIUM**

(30) Priority: 26.01.1999 JP 1696799
(71) Applicant: Sony Corporation, Tokyo 141-0001 (JP)
(72) Inventor: TAKAHASHI, Yasushi Sony Corporation, Tokyo 141-0001 (JP)
(74) Representative: Horner, David Richard
(86) International application number: JP0000386
(87) International publication number: WO0045593

(57) **Abstract**

A video data transmitter Tm1 and video data receiver Rv1 are used in combination. The transmitter Tm1 transmits the main video data vdt of a video title, constituted from a sequence of shots being the basic units of a moving picture, and scenes including at least such a shot, and meta data mdt including data to identify the main video data vdt and data about shots or scenes, separately. Thus, the receiver Rv1 receives the main video data vdt and meta data mdt separately. A video editing means 601 connects the main video data vdt with a predetermined part extracted from the main video data vdt based on the received meta data mdt to provide a preview video.

## Description

### Technical Field

The present invention relates to a video data transmitting and receiving methods, video data transmitter and receiver, video data transmitting/receiving method, video data transmission/reception system, and a data recording medium.

### Background Art

Story video titles such as movies, TV dramas, documentary films, etc. are offered for sale via the ground wave/satellite broadcastings, CATV broadcastings, communications networks such as the Internet, DVD or other package media, and viewers or audiences (will be referred to as "user" hereinafter) purchase a desired one of such video titles.

Conventionally, the electronic program guide (EPG) has been offered to the users as a measure for selection of their desired video titles from many such story contents. However, the EPG provides only text data and thus no video content can be known to the users.

As an alternative solution to the above problem, program promotions with moving pictures are broadcast, in place of the text data, on a channel dedicated to the promotion as in the CS digital multi-channel broadcastings. Especially, since a preview video being a shortened version of a main video data of a video title can effectively appeal to the users, so the distribution of a moving picture preview is currently attracting much attention in the field of industry.

Generally, however, the users want to view a preview video produced, for a video title, from the view points such as an outline, highlights or main casting, etc., of the video title, in which they are interested, before deciding whether or not to purchase main video data of the video title itself. Currently, however, the broadcaster side produces and offers only one preview video per video title.

Also, the multi-channel broadcasting of the program promotion with moving pictures is disadvantageous in that the time schedule on which a video title to the user's taste will be introduced is unknown. That is, such broadcasting does not suit each user's convenience.

On the other hand, an attractive moving picture preview will effectively secure many users, namely, video purchasers. However, the distribution of a moving picture preview, intended only for offering program data, needs a large data amount and costs very much. Also, not many users are interested in a preview video produced by the broadcaster side and having only a limited content. On the other hand, it will take large costs and a great burden for the broadcaster side to prepare and distribute a plurality of preview videos selectable by the individual users in various modes.

Further, the conventional preview video does not include any data indicating which part of the main video data it corresponds to. So, the conventional preview video does not meet the user's demand to interactively view the main video data beginning with his selected shot of the preview video.

### Disclosure of the Invention

Accordingly, the present invention has an object to overcome the above-mentioned drawbacks of the prior art by providing video data transmitting and receiving methods, video data transmitter and receiver, a video data transmitting/receiving method, a video data transmission/reception system, and an data recording medium, adapted to allow the user side to edit, at any time, preview videos from a small amount of data distributed from the broadcaster side as well as from different points of view.

The above object can be attained by providing a video data transmitting method in which, according to the present invention, there is transmitted, via a predetermined transmission path, meta data including at least: data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and predetermined data about the shots or scenes.

Also the above object can be attained by providing a video data transmitter including, according to the present invention, means for transmitting, via a predetermined transmission mechanism, meta data including at least: data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and predetermined data about the shots or scenes.

Also the above object can be attained by providing a video data receiving method in which, according to the present invention, there is received, via a predetermined reception path, meta data including at least: data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and predetermined data about the shots or scenes.

Also the above object can be attained by providing a video data receiver including, according to the present invention, means for receiving, via a predetermined reception mechanism, meta data including at least: data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and predetermined data about the shots or scenes.

Also the above object can be attained by providing a video data transmitting/receiving method in which, according to the present invention, there are transmitted separately: a main video data of a video title, constituted by connecting, in a predetermined sequence, a plurality of at least either shots each being the basic unit of a moving picture or scenes each being a unit of the moving picture, including at least such a shot; data for identification of the main video data; and meta data including predetermined data related to the shots or scenes of the main video data; the main video data and meta data are received separately; and the main video data is manipulated based on the meta data.

Also the above object can be attained by providing a video data transmission/reception system including according to the present invention: a video data transmitter having means for transmitting, via a predetermined transmission mechanism: meta data including at least: data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and predetermined data about the shots or scenes; and a video data receiver having means for receiving the main video data and meta data via a predetermined reception mechanism.

Also the above object can be attained by providing a data recording medium of a computer-readable type, having according to the present invention: predetermined data, recorded as meta data, about a shot being the basic unit of a moving picture, or a scene being a unit of the moving picture, including at least such a shot, of a main video data of a video title, constituted by connecting, in a predetermined sequence, a plurality of at least the shots or scenes; data about at least the scene in the meta data, recorded in a scene file area; data about the shot, recorded in a shot file area; data about the correlation between the scene and shot, recorded in a correlation file area; an evaluation value and time code of each of the scenes, recorded in the scene file area in correspondence to a scene number for the scene and with a pointer appended thereto; an evaluation value and time code of each of the shots, recorded in the shot file area in correspondence to a shot number for the shot; and link data linking the scene number of each of the scenes to the shot number for each of the shots belonging to the scene, recorded in the correlation file area; the pointer of each of the scenes in the scene file area indicating the top address of link data recorded in the correlation file area and associated with that pointer.

Also the above object can be attained by providing a data recording medium of a computer-readable type, having according to the present invention: predetermined data, recorded as meta data, about a shot being the basic unit of a moving picture, or a scene being a unit of the moving picture, including at least such a shot, of a main video data of a video title, constituted by connecting, in a predetermined sequence, a plurality of at least the shots or scenes; data about at least the scene in the meta data, recorded in a scene file area; data about the shot, recorded in a shot file area; data about the correlation between the scene and shot, recorded in a correlation file area; an evaluation value and time code of each of the scenes, recorded in the scene file area in correspondence to a scene number for the scene; an evaluation value and time code of each of the shots, recorded in the shot file area in correspondence to a shot number for the shot; and link data linking the scene number of each of the scenes to the shot number for each of the shots belonging to the scene, recorded in the correlation file area; the shot being sorted based on the evaluation value of each shot and recorded in each of the link data.

### Brief Description of the Drawings

FIG. 1 is a block diagram of first embodiments of the video data transmitter and receiver, respectively, according to the present invention.

FIG. 2 explains an example configuration of a semantic code applied to the present invention.

FIG. 3 is a block diagram of second embodiments of the video data transmitter and receiver, respectively, according to the present invention.

FIG. 4 is a block diagram of the video data receiver shown in FIG. 3.

FIG. 5 is a block diagram of third embodiments of the video data transmitter and receiver, respectively, according to the present invention.

FIG. 6 is a block diagram of fourth embodiments of the video data transmitter and receiver, respectively, according to the present invention.

FIG. 7 is a block diagram of a fifth embodiment of the video data receiver according to the present invention.

FIG. 8 is a block diagram of a sixth embodiment of the video data receiver according to the present invention.

FIG. 9 is a block diagram of a seventh embodiment of the video data receiver according to the present invention.

FIG. 10 explains a computer-readable type recording medium being an eighth embodiment of the present invention, having data recorded therein.

FIG. 11 explains a computer-readable type recording medium being a ninth embodiment of the present invention, having data recorded therein.

### Best Mode for Carrying Out the Invention

The best modes carrying out the present invention, namely, embodiments of the present invention, will be described herebelow with reference to the accompanying drawings.

Prior to further describing the embodiments of the present invention, the terms used herein will be defined in the following. Of course, the terms concern the techniques related to the present invention, and are applied only to the present invention. Note however that all these terms are not correctly the same in meaning as those used with the prior art.

"Shot" is the smallest-size unit of a continuous moving picture, and it corresponds to a single cinematic view.

"Scene" is a middle-size unit of the continuous moving picture, and it is composed of some shots to suggest a story meaning.

"Chapter" is a largest-size unit of the continuous moving picture, and it is composed of some scenes to define the story meaning.

"Recording position data" indicates positions in a recording medium where scenes and shots are recorded, and it includes all data about recording positions such as an absolute sector number, absolute track number, time code, absolute record number, etc.

"Main video data" is an assembly of scenes and shots, forming each video title (e.g., one broadcast program, movie, drama, etc.). Namely, it lasts for a time duration from the beginning until end of a video title. Normally, such main video data composes a broadcast program, a video title distributed via a network, or a video title offered on packaged recording media such as a cassette magnetic tape, optical disc and the like.

"Preview video" is a short video including a part extracted from a main video data of a video title, such as an abstract made for an intended purpose. That is, the preview video is formed including at least a sequence of images extracted from scenes and shots forming together the main video data and which meet the video semantic evaluation values or characteristics of images, which will be described later. Therefore, the preview video is formed from a sequence of only scenes extracted from the main video data, a sequence of only shots extracted from the main video data, or a sequence of shots and scenes extracted from the main video data. Further, the main video data always includes the same images as those forming the preview video. Namely, the scene and shot included in the preview video is in one-to-one correspondence with any of those forming the main video data.

"Mode" is a way in which a preview video is produced for each of possible user's purposes. Namely, when there are more than one user's purpose, preview videos of two or more modes have to be produced from a main video data of a video title. The modes include an outline type, highlight type, keyword type, casting-oriented type, etc. Namely, there will be produced a plurality of preview videos including outline-type, highlight type, keyword type, casting-oriented type ones, etc.

"Semantic evaluation of a video" relates to an impact the video gives in the development of a story for example. It is made by an evaluator or automatically according to a specific standard. The video semantic evaluation value is provided as video semantic evaluation data. Also, the video semantic evaluation data is an index.

Therefore, the video semantic evaluation data is handled as "given condition" in the present invention.

Also, the video semantic evaluation data is given in units of scene, but it is given in units of shot in some cases.

"Characteristic evaluation of a video" relates to the characteristic of the video. For example, it concerns whether or not a performer speaks his or her lines, a special acoustic effect, etc. The video characteristic evaluation value is given as video characteristic evaluation data. Also, the video characteristic evaluation data is an index.

The evaluation is effected by the evaluator to provide a given condition, or an evaluation value is automatically calculated according to a specific standard. Alternatively, the evaluator confirms whether there exists a single or a plurality of determined video characteristic item or items, and an evaluation value is automatically calculated taking the data of the existence as a given condition.

Also, the video characteristic evaluation data is given in units of scene, but. it is given in units of shot in some cases.

"Meta data" is a collection of data related to each video title (e.g., one broadcast program, movie, drama or the like), and it is composed of:
(1) Commentary data on main video data of video title
   1.1) Text data introducing or explaining the entire main video data, or still picture or voice data in the entire main video data
   1.2) Text data introducing or explaining each of chapters constituted by connecting a plurality of scenes, or still picture or voice data in the chapter
(2) Shot/scene data
   2.1) Recording position data about each of shots composing together main video data
   2.2) Recording position data about each of scenes
   2.3) Evaluation value or attribute data about each of shots
   2.4) Evaluation value of attribute data about each of scenes
(3) Correlation data
   3.1) Link data for linkage between a scene number and each of shot numbers composing together the scene
   3.2) Integrated value of evaluation values of each shot, each scene or both as the video changes.

The above data (1), (2) and (3) are combined to form the meta data.

Further, the meta data may further include, in addition to the data (1), (2) and (3), any of the following:
(4) Billing command
   4.1) Command including a level for billing the user for the main video data by one downloading
   4.2 Command including a level for billing the user for the main video data on an as-used basis, that is, by the downloaded amount (time length) or time length of playback
   4.3 Command including a level for billing the user for the main video data by each chapter, scene or shot of the main video data downloaded
   4.4 Command including a level for billing the user for a video (for example, preview video) obtained by manipulating the main video data downloaded
   4.5 Command including a level for billing the user for the meta data itself

The meta data includes a semantic score and semantic code for example.

"Semantic score" is table-formed data in which a video semantic evaluation value taken as a given condition is made to correspond to all scenes composing together main video data of a video title, a video characteristic evaluation value is made to correspond to all shots or at least a part of them, these data are made to correspond to the recording position data or elapsed time data (time code) of at least each scene or each shot, each of the data is recorded as an item, various attributes of each scene and short are recorded, and data to identify ones to be extracted from the shots or scene composing the main video data and which meet predetermined conditions, and billing command, are recorded.

Based on the content of the semantic score, a scene concerned is extracted from the main video data, shots are selected from the extracted scene, and they are connected to each other to edit a preview video, and also a billing is made.

"Semantic code" is code-formed data obtained by coding the content of the semantic score. Alternatively, it is subset data obtained by coding at least a selected part of the items. Therefore, the semantic code has stated therein as coded the data to identify the main video data (data for introduction of the main video data, recording position data or elapsed time data, video characteristic evaluation result and billing command, etc. for a shot selected from a selected scene. Thus, it can easily be distributed over a network.

Based on such a semantic code, shots concerned are extracted from the main video data and connected to each other to edit a preview video, and also a billing is made.

The concept of the present invention will be described below concerning one example thereof. Namely, to extract desired parts from main video data of a video program (video title) and connect them to each other to produce a short video (will be referred to as "compressed video" herein), a picture is stated in units of shot or scene taking as given conditions evaluation values of the picture evaluated by its meaning and effect and made to form a semantic score in which billing command is stated, at least a part of the semantic score is packetized to from a semantic code, the semantic code is taken as meta data of the video title, the meta data is distributed by the same medium (over the same channel) or other medium (over the other channel) before distribution of the main video data of the video title (in program broadcasting, for example, transmission to a receiving side over a channel), and a compressed video is automatically produced from the main video data based on a video editing means previously prepared at the receiving side while referring to the meta data.

Otherwise, the main video data is distributed with the meta data appended thereto.

Alternatively, the main video data is distributed with the meta data and video editing means appended thereto.

Otherwise, the main video data is distributed with the video editing means appended thereto.

Note that the above concept outlines one of many possible embodiments of the present invention.

The preferred embodiments of the present invention will further be described herebelow with reference to the accompanying drawings.

Note that although the embodiments which will be described herebelow are only a part of the appropriate embodiments for illustration and description of the essential construction and operation of the present invention and hence favorably limited in the technical and structural respects, the present invention is not limited to these embodiments unless otherwise specified in the following.

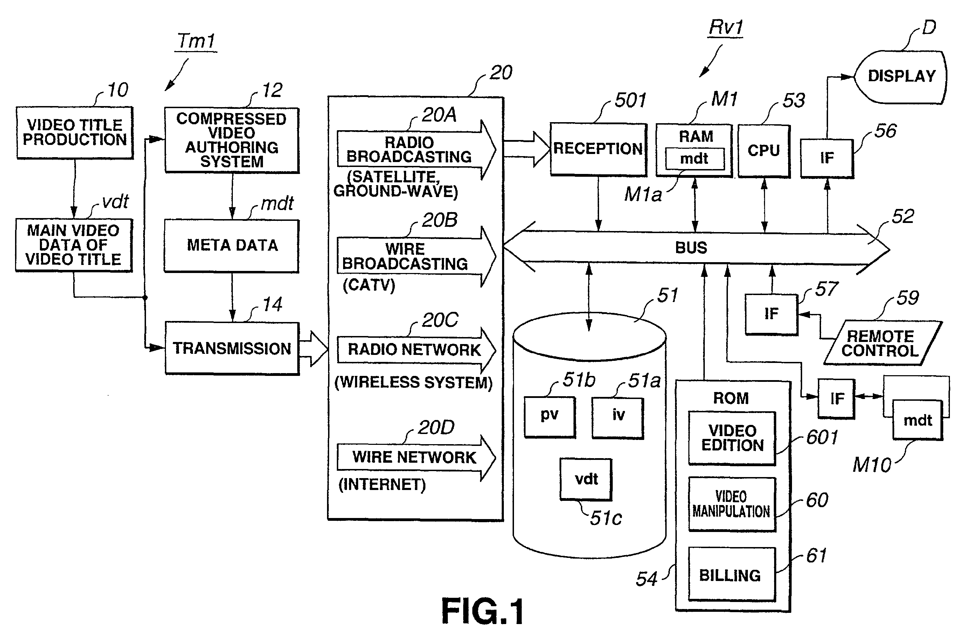

Referring now to FIG. 1, first embodiments of the video data transmitter and receiver, respectively, according to the present invention are illustrated in the form of a block diagram.

As shown in FIG. 1, a video data transmitter Tm1 according to the first embodiment of the present invention includes a video title production unit 10, compressed video authoring system 12, and a transmitting unit 14.

The video title production unit 10 has a video editing function to edit a material video film to produce a main video data vdt in the form of a digital signal. The main video data vdt is formed by connecting shots being the basic unit of a moving picture or scenes each including at least such a shot to each other in a predetermined sequence.

The compressed video authoring system 12 effects an authoring based on the main video data vdt to edit data to identify the video title and a semantic score including at least predetermined data about shots or scenes composing the main video data vdt. The semantic score is included in the meta data.

The compressed video authoring system 12 edits meta data mdt in the form of a semantic code by coding the semantic score. The meta data mdt includes a video data commentary, shot/scene data, correlation data, billing command, etc.

The configuration of the meta data mdt in the form of a semantic code will further be described later.

The transmitting unit 14 processes the meta data mdt by modulation or the like suitably for transmission and transmits it via a predetermined transmission/reception mechanism 20 at a designated time.

Alternatively, the transmitting unit 14 transmits the main video data vdt via the predetermined transmission/reception mechanism 20 at another designated time in some cases.

The entire compressed video authoring system 12 and at least parts of the video title production unit 10 and transmitter 14, respectively, are configured as programs readable by a computer (not shown).

Note that the predetermined transmission/reception mechanism 20 is at least one of a radio broadcasting facility using a radio broadcasting (satellite broadcasting and ground wave broadcasting) as a transmission/reception path 20A, a cable broadcasting facility using a cable broadcasting (CATV or the like) as a transmission/reception path 20B, a radio network facility using a radio network as a transmission/reception path 20C, and a cable network facility using a cable network (Internet) as a transmission/reception path 20D.

The most preferable transmission mechanisms include a satellite digital broadcasting (BS and CS) and its associated data broadcasting. Also, the CATV and Internet will work as preferable transmission mechanisms.

Next, the operation of the transmitter Tm1 for video data will be described herebelow:

First, the video title production unit 10 with a video edition function produces main video data vdt in the form of a digital signal by editing a material video film. The compressed video authoring system 12 will effect an authoring based on this main video data vdt, edit a semantic score and a semantic code obtained by coding the semantic score as meta data mdt, and stores the meta data mdt into a buffer memory.

Next, at a designated time, the transmitter 14 extracts the meta data mdt from the buffer memory, processes it by modulation or the like suitably for transmission, and transmits the meta data mdt via the predetermined transmission/reception mechanism 20, for example, Internet.

Also, at another designated time, the transmitter 14 can transmit the main video data vdt via the predetermined transmission/reception mechanism 20. The transmission/reception mechanism 20 used to transmit the main video data vdt may be a one different from the transmission/reception mechanism 20 used to transmit the meta data mdt. For example, the main video data vdt may be transmitted via a satellite broadcasting or ground wave broadcasting.

As in the above, the meta data mdt may be distributed over a channel other than that for the main video data vdt and at a designated time other than that for the main video data vdt.

As a result, the meta data mdt of the main video data vdt in consideration is transmitted via the predetermined transmission/reception mechanism, so that the receiving side (destination of transmission) can extract data (title name and commentary on the video data) to identify the main video data vdt, included in the meta data mdt. Thus, various kinds of data about the main video data vdt can be supplied to the receiving side. That is, a knowledge as to the main video data vdt is supplied to the receiving side without using the main video data vdt.

Also, since the compressed video authoring system 12 is provided to produce meta data mdt as in the above, it is possible to effect a series of operations from the production of meta data to transmission of the meta data. Thus, the operations from the production of meta data to transmission thereof can be effected in an instant. Further, since it is possible to instantly extract the data (title name and video data commentary) to identify video data, included in the meta data, various kinds of data as to the video data can instantly be transmitted to the receiving side (destination of transmission). That is, a knowledge concerning the video data can instantly supplied to the receiving side.

The configuration, and use, of the semantic code being an example of the meta data applicable to the present invention will be described below:

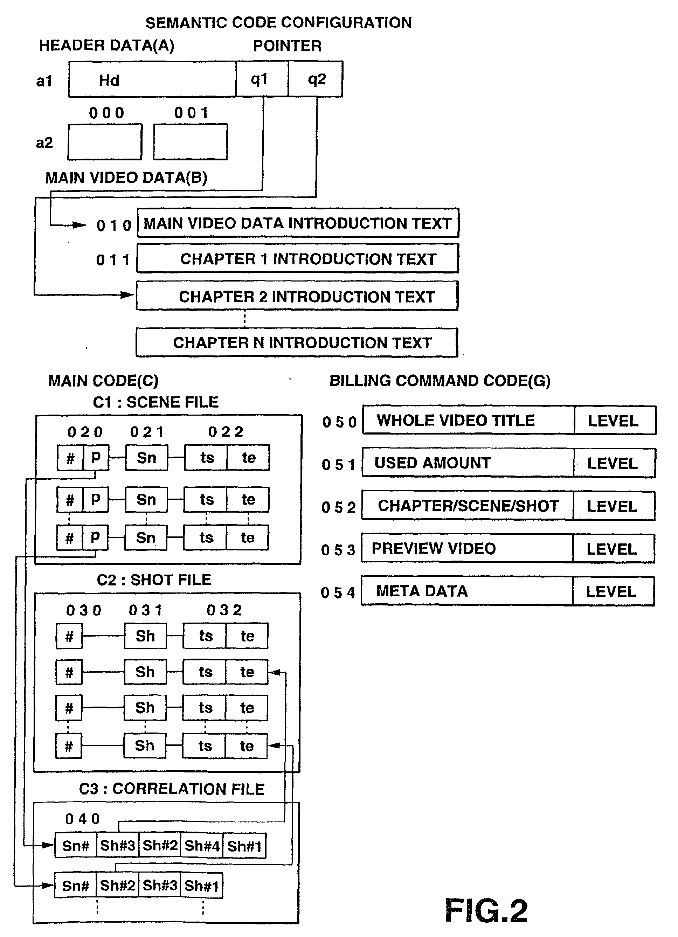

FIG. 2 shows the logical structure of a semantic code being meta video.

The semantic code consists of a header data-related code (A), video data (B) including a code related to video title commentary, and a main code (C) including shot and scene data of the video data. That is, the video data (B) including the video title commentary-related code identifies the video data, and the main code (C) includes predetermined data as to shots or scenes.

### A. Header data

a1 General data concerning a program (program name, program code, broadcasting channel, date of broadcasting, program genre, etc.), address pointer q1 for item 010 in the video data or address pointer q2 for item 011 in the video data
a2 Attribute item data
   000 Flag for existence or absence of attribute
   001 Application or preview mode

### B. Video data

010 Text data of introduction or explanation, static picture data (thumbnail image data) or voice data, of the entire video data
011 Text data of introduction or explanation, still picture data (thumbnail image data) or voice data, of each chapter composed of a plurality of scenes connected together

### C. Main code

A main code has recorded therein a scene file, shot file and a correlation file.
C1 Scene file
   Records the following for each scene:
   020 Scene number # and pointer p
   021 Scene evaluation value Sn
   022 Time code (start point ts and end point te)
C2 Shot file
   Records the following for each shot:
   030 Shot number #
   031 Shot evaluation value Sh and other attributes (application etc.)
   032 Time code (start point ts and end point te)
C3 Correlation file
   040 Link data of scene number Sn # and shot number Sh #

   A plurality of shots Sh #1, #2, etc. included in a scene number Sn # is linked to the scene number.

Further, the semantic code may be formed to include any of the following codes (G) related to the following billing commands:

### G. Billing command codes

050 Command including a level for billing the user for the video data by one downloading
051 Command including a level for billing the user for the video data on an as-used basis, namely, by the downloaded amount (time length) or time length of playback
052 Command including a level for billing the user for the video data by each chapter, scene or shot of the video data downloaded
053 Command including a level for billing the user for an image (for example, preview video) obtained by manipulating the video data downloaded
054 Command including a level for billing the user for the meta data itself

A plurality of shots having different meanings may be included in a link data 040 based on the statement of the attributes incidental to the shot evaluation value 031.

To save the data amount of the semantic code, the data in the shot file C2 may be limited to shots included in a scene whose evaluation value is higher a constant scene evaluation value 021 (in the scene file).

Also, all the shots 030 in all the scenes 020 and their evaluation values 031 may be included in the shot file C2. They are effective especially as authoring data.

In the scene file C1, each scene evaluation value 021 and time code 022 are made to correspond to the scene number 020. The. pointer p appended to the scene number 020 points to the leading address of the link data 040 corresponding to the correlation file C3.

Because of the above data structure, when a scene to be selected is determined by checking the scene evaluation value 021 at the receiver side which will further be described later, the pointer p appended to the scene number 020 allows the scene to quickly be entered into the link data 040 in consideration.

In case there exists in the link data 040 a plurality of shot numbers Sh #n (n = 1, 2, ...) for one scene number Sn #, the plurality of shot numbers should desirably be listed in an order of sorting based on the shot evaluation value 031 and recorded as the link data 040 during production of the semantic code.

Because of the above data structure, when selecting a representative shot from a scene number 020 at the receiver side which will further be described later, the pointer p of the scene number 020 allows to jump to a corresponding link data 040 in the correlation file C3 and select a leading one of the shot numbers Sh #n listed in the link data 040, whereby a shot can be selected in a reduced time.

Further, based on the selected shot number, the start point ts and end point te of a shot 030 corresponding to the shot number in the shot file C2 are read from a corresponding time code 032. A corresponding shot video will be extracted from the video data based on the time code 032.

Also at the receiver side which will further be described later, the length of playing time of a preview video can be adjusted or otherwise set so that when selecting more than two shots from a scene number 020, it is possible to jump to a corresponding link data 040 and extract a required number of shots one after another starting with the leading one of the shots listed in the link data 040, whereby shots can be selected in a reduced time.

The access to, and handling of, the billing command code (G) will further be described later.

The semantic code has been described in the foregoing concerning the use thereof in selecting a scene concerned based on a scene evaluation value, then selecting a shot belonging to the scene and extracting the shot from the start point until the end point thereof. Alternatively, the semantic code can be used for extraction of a video in units of scene. In this case, a scene is selected based on the scene evaluation value 021 in the scene file C1, the time code 022 (start point ts and end point te) of the scene is read, and a scene concerned is extracted from the video data based on the time code 022.

Similarly, the semantic code can be used to extract a mixture of a video in units of scene and a video in units of shot.

For the scene evaluation, a video significance evaluation is adopted, a scene representing a complication of a story for example is taken as a positive (+) value while a scene representing an easing of the story is taken as a negative (-) value. The degrees of each of the complication and easing are represented by real values from absolute values of 0.1 to 1.0, respectively. Note that the "complication" means an occurrence of a new problem and an elevation of character's emotional due to the problem while the "easing" means a solution of the problem and character's freedom from emotional distress and catharsis, brought by the problem solution.

Many of the previews of a movie and TV program include many "complication" scenes such as occurrence of a problem, new situation, new development of human relations, etc. to attract viewer's attention and less "easing" scenes such as a solution to the problem, a conclusion, etc. Therefore, default thresholds for scene selection are (+) ≥ 0.6 for a scene evaluation value Sn reflecting the complication scene and (-) ≤ -0.8 for a scene evaluation value Sn reflecting the easing scene. The movie and TV program unconcernedly include an explanation of the story situation or the beginning of a drama in the introductory part thereof. Therefore, the default threshold for the introductory part is decreased 0.1 point, with the result that the evaluation value Sn for a scene reflecting the complication scene is (+) ≥ 0.5 and the evaluation value Sn for a scene reflecting the easing scene is (-) ≤ -0.7.

When a scene evaluation value Sn is given by a real value, the position of a peak scene will be calculated with an algorithm.

The above scene evaluation value Sn may be given by a binary digit (0, 1). In this case, Sn = 1 represents a high-score scene and a peak scene. By giving a scene evaluation value Sn by a binary digit (0, 1), it is possible to simplify the data structure and calculation. Also, the sending side can definitely limit a part of a video title that may be disclosed to the user. Note that the scene evaluation value Sn = 1 may not always be based on the semantic score but can be arbitrarily selected by the sending side. For example, a scene which should not be disclosed because of the rights of portraits and ratings will not be included in an intended preview video even if its scene score is high. Reversely, there is a video whose semantic score is low but which should not be disclosed for the purpose of marketing.

Also the above scene evaluation value Sn may be given by an integer (0, 1, 2 or 3). In this case, Sn = 1 indicates a high-score scene, Sn = 2 indicates a peak scene, and Sn = 3 indicates just a scene. By giving a scene evaluation value Sn by an integer (0, 1, 2 or 3), it is possible to designate a number of seconds for presentation within shot and a position by changing the link to the shot file C2 according to th type of scene.

Further, it is possible to give the scene evaluation value Sn by an integer (0, 1, 2, 3 or 4) indicating a disclosure level. In this case, the burden to the execution can be lessened by replacing the scene evaluation value Sn with an integer (0, 1, 2, 3 or 4) with which a scene has simply been ranked by the sending side at the step of coding rather than by selecting a scene corresponding to a disclosure level through calculation of a score. Note that the ranking is effected with a high-score scene, peak scene, just a scene, etc. taken in consideration.

When editing a preview video by extracting a part or a shot video from a main video data of a video title, for example, when producing a brief summary video of 1 to 2 min from a movie of two hours, a shot or scene of the main video data has too long a length of time if not manipulated, so that many cuts cannot be included in the summary video. To avoid this, the shot file C2 defines, when coded, a scene section thereof that can be disclosed, whereby it is possible to selectively present only cuts in the shot which should not be disclosed. Many of video cuts used in commercial previews are of 1 to 2 sec or less, and thus well set and compact since they are obtained by cutting only a part of the video title that is of several to tens seconds. Generally, many of the beginnings of shots are explanatory or introductory images while the most important issue or a solution to the issue is placed at the ending portion. Thus, an effective algorithm to automatically extract a summary video from a shot or scene it to cut only a part of the ending for specific seconds.

Next, the first embodiment of the video data receiver Rv1 according to the present invention will be described below with reference to FIG. 1. The video data receiver Rv1 will be described as a common bus-type digital processing mechanism. Note however that the present invention is not limited to such a mechanism but the video data receiver Rv1 may be a dedicated/separated internal bus type as well as a one of various digital processing mechanisms using a data-driven architecture etc, which will also be true for other embodiments of the present invention which will be described later.

The first embodiment of the video data receiver Rv1 includes a bus 52 being a common data path and, as connected to the bus 52 for signal transmission and reception to and from the bus 52, a CPU 53 (central processing unit; a microprocessor, for example), a temporary memory M1 being a RAM (random access memory) to and from which data can be written and read at any time, a read-only memory (ROM) 54, a receiving unit 501, a large capacity storage unit 51 being a hard magnetic disc drive (HDD), DVD, RAM or the like, a display unit D via an interface 56, and a remote controller 59 via an interface 57.

Further, a MemoryStick M10 may be connected to the bus 52 via an interface 58 and a drive unit. The MemoryStick M10 is an example of data carrier unit. Being a nonvolatile memory, it is suitable for use to save data, compact and lightweight for easy transportation or carrying.

The read-only memory (ROM) 54 has stored therein a video editor 601, video manipulator 60 and a billing processor 61 all as a program readable and executable by the CPU 53.

The receiving unit 501 receives the meta data mdt from the video data transmitting unit Tm1 via the transmission/reception mechanism 20, and stores it as a file M1a into the temporary memory M1. Otherwise, the receiving unit 501 records the received meta data mdt to the large capacity storage unit 51. Alternatively, when the meta data mdt is previously supplied to the MemoryStick M10, the receiving unit 501 will capture the meta data mdt in the MemoryStick M10 into the temporary memory M1 or large capacity storage unit 51.

Further, the receiving unit 501 can also receive via the transmission/reception mechanism 20 the main video data vdt having been transmitted from the video data transmitter Tm1 at the other time, and record it to the main video data file 51c in the large capacity storage unit 51.

The remote controller 59 can be operated by the user to enter a command for video display, command for preview video mode, command for display of preview video on screen, command for display of main video data on screen, etc. via the interface 57.

That is, the remote controller 59 is operated for at least video manipulation and setting of conditions.

The video manipulator 60 stored in the ROM 54 as a program readable and executable by the CPU 53 is read by the CPU 53 to manipulate the main video data as will be described below. Namely, the video manipulator 60 descrambles the coded main video data, manipulates and controls a video data for display on the display unit D. Also, the video manipulator 60 sends a command to the billing processor 61 to execute the billing processing for the main video data. The billing is done on an as-used basis at the time of canceling a continuous scrambling of the main video data, at the start of a continuous playback of the main video data or correspondingly to the progress of the continuous playback of the main video data.

The video editor 601 stored in the ROM 54 as a program readable and executable by the CPU 53 is read by the CPU 53 to edit a video as will be described below:

That is, the video editor 601 receives a command entered by the user. When a command for a video title is entered, the video editor 601 checks whether the meta data of the video title exists in a file M1a in the temporary memory M1. If it exists, the video editor 601 will use it. If not, the video editor 601 transcribes the meta data of the video title in the large capacity storage unit 51 into the temporary memory M1 as a file M1a.

Next, the video editor 601 will receive a next command from the user via the remote controller 59.

When the command entered by the user is a one for continuous playback of the main video data of the video title, the video editor 601 will check if the main video data vdt of the video title exists in the main video data file 51c in the large capacity memory 51, and then immediately triggers the video manipulator 60 to pass the subsequent control to the video manipulator 60.

When the command entered by the user is a one for display of the general introductory data or chapter introductory data of the video title, the video editor 601 will refer to the meta data mdt of the video title of the file M1a in the temporary memory M1, read the general introductory data or chapter introductory data of the main video data from the meta data mdt, edit an introductory video data and send it to the video manipulator 60. These data are disposed as an introductory video on the display unit D by the data manipulator 60.

Note that during edition of the introductory video data, the main video data vdt is not always be required. Therefore, the user can view the introductory video without having to get the main video data vdt ready.

For billing the user for the display of the introductory data, the video editor 601 will send a billing command to the billing processor 61. to execute the billing.

The video editor 601 can also save the edited introductory video iv into the introductory data file 51a in the large capacity storage unit 51.

Next, when the user wants to display a preview video, he or she will define a desired preview video mode. Further, the user defines a disclosure level of the preview video in some cases. The preview video disclosure level is defined by entering a command for a threshold. Note that the threshold is at least a part of conditions under which partial videos are extracted from the main video data vdt and partial videos conforming to the conditions are extracted from the main video data.

Also, when no threshold is defined by the user, a predetermined default will be applied.

According to the entered definition, the video editor 601 checks if the main video data vdt exists in the main video data file 51c in the large capacity storage unit 51. If it exists, the video editor 601 refers to the meta data mdt of the video title in the file M1a in the temporary memory M1, extracts partial videos conforming to the threshold and meeting other requirements one after another from the main video data vdt to edit a preview video data (preview video), and sends it to the video manipulator 60. These data are displayed as preview videos of the user-defined mode and disclosure level on the display unit D by the video manipulator 60.

When billing the user for display of the preview video, the video editor 601 will sen a billing command to the billing processor 61 to effect the billing. When billing the user by the disclosure level of the preview video, the video editor 601 will send a disclosure level data to the billing processor 61. Based on the disclosure level data, the billing processor 61 will bill the user by the disclosure level.

The video editor 601 can save the edited preview video pv into a preview video data file 51b in the large capacity storage unit 51.

Billing the user for reuse of the saved preview video data PV depends upon the agreement concluded with the user. Normally, if billing has been made during edition or production of a preview video, no billing will be made for reuse of the preview video. On the other hand, if no billing has been made during edition or production of a preview video, billing will be made for each reuse of the preview video.

The billing processor 61 stored in the ROM 54 as a program readable and executable by the CPU 53 will be read by the CPU 53 to edit a video as will be described below:

That is, the billing processor 61 receives a command from the video manipulator 60 and bills the user on an as-used basis at to cancel the continuous scrambling of the main video data, at the start of a continuous playback of the main video data or correspondingly to the progress of the continuous playback of the main video data. The billing process is up-linked to the billing center via a billing data network.

Alternatively, the MemoryStick M10 also works as a billing settlement card. In of a billing settlement system which reduces a billed amount from a recorded deposit money amount, the billing processor 61 sends a billing data to the MemoryStick M10 by which the billed amount is settled.

In the above, it has been assumed that the main video data vdt is already stored in the main video data file 51c of the large capacity storage unit 51. The main video data vdt has not to be prepared at the time of edition and production of the introductory video iv but it is necessary at the time of edition and production of a preview video PV and playback of the main video data vdt for display. That is to say, for edition and production of the preview video PV and production and display of the main video data vdt, the main video data should be prepared as at least coded.

For saving the main video data vdt to the main video data file 51c, the main video data vdt may be received via the transmission/reception mechanism 20 at other previously designated time, and stored in the large capacity storage unit 51 or captured into th large capacity storage unit 51 with a package medium such as a DVD connected.

The video data receiver Rv1 constructed as in the above functions as will be described below:

Firstly, a meta data mdt is captured and received. Namely, the meta data mdt captured and received by the receiving unit 501 via the transmission/reception mechanism 20 is captured into the temporary memory M1 or large capacity storage unit 51.

Alternatively, when the meta data mdt is recorded in the MemoryStick M10, and supplied from the latter, the receiving unit 501 captures the meta data mdt in the MemoryStick M10 into the temporary memory M1 or large capacity storage unit 51.

The meta data mdt contains a main video data commentary data, shot/scene data, correlation data, billing command, etc.

Secondly, an introductory video based on data iv introducing a user-defined video title is edited and displayed as will be described below:

Based on a definition by the entire video data introduction or each chapter introduction entered by the user, the video editor 601 will extract corresponding introductory videos iv from the meta data mdt to edit an introductory video and display it via the image manipulator 60. Also, the video editor 601 will record the edited introductory video into the large capacity storage unit 51 as necessary.

Further, the video editor 601 will send a command to the billing processor 61 to bill the user for the introductory video when necessary.

Thirdly, a preview video of a user-defined video title is edited and displayed as will be described below:

At an arbitrary time before a user's definition is accepted, the main video data vdt of the video title is prepared. The main video data vdt will be prepared by the receiving unit 501 recording, at the arbitrary time, the main video data vdt of the video title received via a satellite or ground wave digital broadcasting, CATV or the like or introduced from outside into the main video data file 51c in the large capacity storage unit 51.

After the main video data vdt is prepared as in the above, the video editor 601 accepts a user's definition concerning a preview video, extracts video parts corresponding to the user's definition consecutively from the main video data vdt based on the user's definition, edits a preview video pv and displays it via the video manipulator 60. Also, at edition or display of each preview video PV, a command is sent to the billing processor 61 for billing the user. At this time, if the billing unit price varies depending upon the disclosure level of the preview video, the video editor 601 will refer to the meta data mdt and send billing level data to the billing processor 61. Also, the edited preview video is recorded to the large capacity storage unit 51 as necessary.

Fourthly, the main video data of a user-defined video title is continuously played back and displayed as will be described below:

When the user enters his definition of a desired video title and purchase of the main video data of the video title for appreciation, the video editor 601 will confirm whether the main video data vdt of the video title has been prepared in the main video data file 51c in the large capacity storage unit 51. When it is prepared, the video editor 601 sends a command to the video manipulator 60 which will start play back and display the main video data vdt. Also, the video editor 601 sends a command to the billing processor 61 which will bill the user on an all-at-once base or correspondingly to the progress of the playback and display before descrambling the main video data vdt. At this time, if the billing unit price varies depending upon the rank (or level) of the video title, the video editor 601 will refer to the meta data mdt and sends billing level data to the billing processor 61.

The above process will be described below concerning the use of each item of the semantic code being the meta data with reference to FIG. 2. When the receiving side receives a semantic code, the user will first read, for display, a video title name from general program-related data (video title name, video title code, broadcasting channel, broadcasting date, program genre, etc.) in item a1 of header data (A) in the semantic code. Thereby, the user can check whether the received semantic code is a one of his desired video title.

After making sure that the video title is the desired one, the user will designate a pointer q1 or q2 of item a1 of the header data (A). Then, automatic entry is made to the address of item 010 or 011 of the main video data (B).

When the entry is made to item 010, an introduction or explanation text of the entire main video data is read and automatically disposed on the screen. Also, another pointer (not shown) may be used to make the entry to an introductory still picture (thumbnail still picture or the like) file or a text voice file.

On the other hand, when the entry is made item 011, an introduction or explanation text, explanatory still picture or text voice of each chapter of the main video data is automatically displayed. A desired chapter can be designated by a pointer q2.

When the user having viewed the introduction by the displayed text, still picture or voice judges it necessary to further view a preview video of his desired video title and enters a command for the preview video, the main video data using the semantic code is manipulated based on the command to produce a preview video.

The preview video will be produced by the video editor 601. The video editor 601 checks the scene evaluation value 021 in the scene file C1 and determines, for extraction, one of the scenes meeting predetermined conditions (for example, a threshold). Then, from a point p appended to the scene number 020, it gets access to a link data 040 of a corresponding scene number Sn # in the correlation file C3, extracts a leading shot number (for example, Sh #3) in the link data 040, reads a corresponding time code 032 of a shot number 030 coinciding with the shot number (for example, Sh #3) in the shot file C2, and extracts a shot video concerned from the main video data based on the time code 032.

The video editor 601 repeats the extraction of shot videos concerned from the main video data to extract a plurality of shot videos, and connects them to produce a preview video.

The billing command code (G) is read by the video editor 601. In case the method of billing for a video title is defined at the video title supplying side, a flag is set at each of items 050 to 054. For example, when a flag is set at item 050 while no flag is at item 051, billing for the video title is made by one downloading, not on an as-used basis. Also, a billing unit price (level) based on the rank of the video title is defined by the supplying side.

Reversely when a flag is set at item 051 while no flag is at item 050, billing by one downloading is not allowed for the video title but only on an as-used basis. A billing unit price (level) is defined for item 051 as well.

On the other hand, when a flag is set at item 052, billing is allowed by each chapter, each scene or each shot. A billing unit price (level) is defined for item 052 as well.

When a preview video of the video title is edited with a flat set at item 053, billing is made for this preview video as well. The billing unit price for this item 053 is defined by the supplying side based on the kind of the preview video mode and disclosure level (extent of the disclosure).

Further, with item 054, billing is made for use of the meta data mdt also. A billing unit price will be defined corresponding to the level of use in some cases.

In this embodiment, the billing command code (G) is read by the video editor 601. However, the present invention is not limited to this arrangement but the billing command code (G) may be read by the billing processor 61 or the like for example.

Thus in this embodiment, only a semantic code, which is of a less data amount, is transmitted and received as the meta data instead of distributing a preview video itself. And, the meta data can be distributed widely and inexpensively via a variety of media.

Thus, by receiving a meta data of a video title in consideration at the receiving side via the reception mechanism, it is possible to capture a knowledge of the main video data of the video title by extracting the introductory data of the entire main video data or each chapter without having to use the main video data.

Further, having received the main video data, the receiving side can refer to predetermined data about shots or scenes included in the received semantic code, extract predetermined shots or scenes from the main video data, and edit a preview video composed of these extracted videos. Thus at the receiving side, it is possible to consider the contents and the like of the main video data before purchasing the latter for appreciation.

The user can select the outline mode type, highlight mode type, casting mode typ preview video or the like within the range of the semantic code to confirm the content of the program from his own point of view.

Further, since the user can use data for identification of the main video data to identify the meta data itself, he can easily confirm a desired meta data even if a plurality of meta data sets has been received.

In this embodiment in which only the meta data is received separately from the main video data and saved at the receiving side, at an arbitrary time after the reception of the meta data, the main video data can be manipulated various ways referring to the saved meta data to produce a preview video as mentioned above. That is, at another arbitrary time, the main video data can be manipulated various ways. Further, the various manners of billing can be done as having been described in the above.

Also, after the user's election of a preview video mode and the processing for billing, a specific mode command can be given to present a limited cut for playback of the main video data. More specifically, header data a2 (item data of attribute) is used to set a choice of limited modes and play back the main video data by skipping not-to-be-disclosed parts based on descriptive data C1 (scene file), C2 (shot file) and C3 (correlation file) of main code. The descriptive data C1 (scene file), C2 (shot file) and C3 (correlation file) of the main code indicate the parts not to be disclosed. With the user's selection and definition at the time of purchasing a video title, it is possible for the same main video data to present an appropriate content for the user's (or viewer's) age, religion and others.

Also, the video data receiver according to the present invention can be designed as a home server incorporating the function of an integrated receiver/decoder (IRD) connected to a mixed system consisting of a hard disc, digital recording tape and RAM. The home server will further be described later.

Furthermore, in the video data receiver according to the present invention, for saving meta data distributed via the broadcasting or Internet, the incorporated magnetic disc drive, and in addition, a so-called data carrier device such as a MemoryStick, memory card, memory tag or the like incorporating a freely readable and writable semiconductor memory such as SRAM, EEPROM, flash memory or the like, can be used.

Especially, since the data amount in the meta data may be relatively small, a MemoryStick easy to use, lightweight and inexpensive should preferably be used.

Further, a non-contact type data carrier device may be used for the above purpose.

Also, various functions may be added to the above receiver structure taken as a basic one. For example, depending upon a video title, the billing processor can capture data in the semantic data. and work with th descrambling function of the video editor so that the user can purchase a part of the program for appreciation.

Further, the video data receiver according to the present invention can be used as will be described below:

In the digital broadcasting such as CS, BS, ground wave, CATV, etc., there can be made available a service in which a video title which should not necessarily be hot and real-time and the user will view at a desired time, not at the broadcasting date, such as a movie, broadcast relayed from a theater, entertainment program, documentary, live concert record, anniversary sports event or the like is supplied at a midnight time zone and at a low cost, only the user wanting the video title downloads it to his own terminal and purchases it for appreciation after checking its content for his convenience.

For example, in the digital CS broadcasting system, a program supply company, program outsourcing company or program custom-making company will reform, into a semantic code, minimum necessary data of a semantic score captured by a compressed video authoring system for cutting and reconstitution of the compressed video and packetize it as meta data of a video title.

The meta data is distributed in advance via the digital broadcasting or data broadcasting or via the Internet before releasing the main video data. Alternatively, the meta data may be recorded by the supplying side to a recording medium such as a MemoryStick, floppy disc or the like and distributed to the user on the medium. A read-only memory (ROM) is suitably usable in the MemoryStick for use to distribute the meta data. The recording medium having the meta data recorded therein can be distributed on sale in stores or by mail.

With any of the distribution ways, the meta data will be distributed to the user at an arbitrary time before release of the main video data.

In the foregoing, the distribution of only the meta data has been described.

Next, manners of distributing the meta data not singly but along with other data will be described one after another herebelow with reference to the accompanying drawings:

### (1) Transmission and reception of meta data and main video data of which one is appended to the other

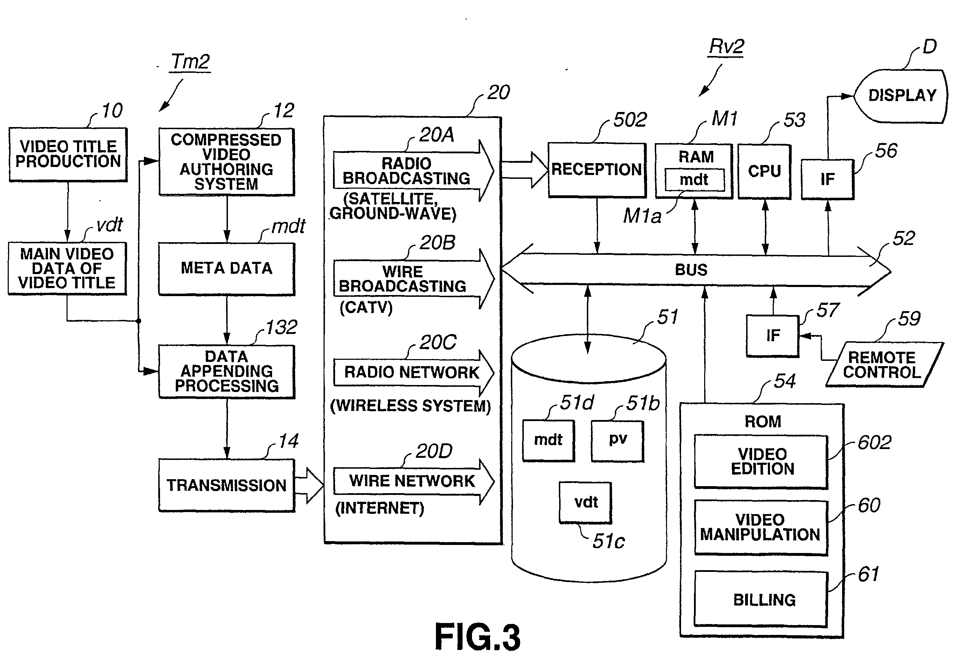

Referring now to FIG. 3, second embodiments of the video data transmitter and receiver, respectively, according to the present invention are illustrated in the form of a block diagram . Note that the same or similar elements as or to those in FIG. 1 are indicated with the same or similar references as those in FIG. 1 and will not be described any longer.

The video data transmitter Tm2 according to the second embodiment includes a video title editor 10, compressed video authoring system 12, data appending processor 132 and a transmitting unit 14.

The data appending processor 132 functions to edit a signal by appending meta data mdt provided from the compressed video authoring system 12 to a main video data of a video title provided from the video title editor 10 or by appending the main video data vdt to the meta data mdt and send it to the transmission unit 14.

It is assumed that the meta data mdt includes a video title name, shot/scene data, correlation data, billing command, etc.

The transmission unit 14 has a function to process the signal sent from the data appending processor 132 by modulation or the like, and send it via the predetermined transmission/reception mechanism 20 at a designated time.

The video data transmitter Tm2 thus constructed functions as will be described below:

The video title editor 10 having the video edition function edits a material video film to produce a digital main video data vdt and supplies it to the compressed video authoring system 12 and data appending processor 132. Then, the compressed video authoring system 12 will effect an authoring based on the main video data vdt, edit a semantic code as a meta data mdt and supply it to the data appending processor 132.

The data appending processor 132 appends the meta data mdt to the main video data vdt or main video data vdt to the meta data mdt and thus send them together to the transmission unit 14. The transmission unit 14 will process the meta data mdt and main video data vdt by modulation or the like at a designated time, and transmit it via the predetermined transmission/reception mechanism 20 such as a satellite broadcasting or ground wave broadcasting.

For example, a program custom-making company will append the meta data mdt in the form of a semantic code to a leading part of the main video data vdt at the stage of broadcasting, and transmit them.

Then, the meta data mdt and main video data in consideration are transmitted together via the predetermined transmission/reception mechanism. Thus, the main video data vdt and meta data mdt can easily be made to correspond to each other, and no confusion will take place between them.

As in the above, the compressed video authoring system 12 is provided to edit meta data, whereby operations from edition of meta data to transmission thereof can be effected in series. Thus, meta data can be edited and transmitted instantly. Further, since predetermined data concerning shots or scenes included in the meta data can instantly be extracted at the receiving side, data consisting of only predetermined shots or scenes in the transmitted main video data and which are used to edit a video can instantly be transmitted to the receiving side.

On the other hand, the video data receiver Rv2 according to the second embodiment of the present invention includes a bus 52 and, as connected to the bus 52 for signal transmission and reception to and from the bus 52, a CPU 53, temporary memory M1, ROM 54, reception unit 502, large capacity storage unit 51, a display unit D via an interface 56, and a remote controller 59 via an interface 57.

The video data receiver Rv2 further includes a MemoryStick (not shown) connected to the bus 52 via an interface and drive unit as in the first embodiment (as shown in FIG. 1).

The ROM 54 stores a video editor 602, video manipulator 60 and a billing processor 61 all as programs readable and executable by the CPU 53.

The reception unit 502 receives, via the transmission/reception mechanism 20, a signal of the main video data vdt and meta data mdt, of which one is appended to the other, transmitted from the video data transmitter Tm2, and records the separated main video data vdt to a main video data file 51c in the large capacity storage unit 51. Further, the reception unit 502 will record the separated meta data mdt to a meta data file 51d in the large capacity storage unit 51. Alternatively, the reception unit 502 will record the meta data mdt to a MemoryStick (not shown).

The remote controller 59, video manipulator 60 and billing processor 61 are similar in construction and function to those in the aforementioned embodiment.

The video editor 602 accepts a command entered by the user. When it is supplied with a command for a video title, it will confirm whether the main video data vdt of the video title exists in the main video data file 51c of the large capacity storage unit 51, and then whether the meta data mdt of the video title exists in the meta data file 51d in the large capacity storage unit 51.

When both the above exist, the meta data mdt is transferred from the meta data file 51d to the temporary memory M1 and it is taken as a file M1a.

Next, the video editor 602 is supplied with a next command from the user via the remote controller 59. If the user's command is to continuously play back the main video data vdt of the video title, the video manipulator 60 is immediately triggered and the subsequent control is passed to the video manipulator 60 since it has already been confirmed that the main video data vdt of the video title exists in the main video data file 51c in the large capacity storage unit 51.

When the user wants to display a preview video, he enters a command for his desired preview video mode. Further, the user enters a command for a level of disclosure of the preview video in some cases. The disclosure level of the preview video is commanded by entering a threshold. Note that the threshold will form at least a part of the conditions under which a video is partially extracted from the regular video vdt and partial videos meeting the conditions will be extracted.

Also, when no threshold is defined by the user, a predetermined default will be applied.

According to the command, the video editor 602 will refer to the meta data mdt of the video title in th file M1a in the temporary memory M1, extract partial videos conforming to the threshold and meeting the other conditions one after another from the main video data vdt recorded in the main video data file 51c in the large capacity storage unit 51, edit a preview video data (preview video) and send it to the image manipulator 60. These data will be displayed on the display unit D via the image manipulator 60 as preview videos being in the user's desired mode and at the disclosure level.

When billing the user for display of the preview video, the video editor 602 will send a billing command to the billing processor 61 to effect the billing. When billing by the disclosure level of the preview video, the video editor 602 will send a disclosure level data to the billing processor 61 which will bill the user by the disclosure level.

The video editor 602 can also record the edited preview video pv to the preview video data file 51b in the large capacity storage unit 51.

The billing for reuse of the preview video data pv thus recorded depends upon the agreement with the user. Normally, if billing has been made at the time of preview video edition or production, no billing will be made at the reuse of the preview video. On the other hand, if no billing has been made at the time of preview video edition or production, billing will be made at every reuse of the preview video.

When the user's command is to display the entire main video data introduction data or chapter introduction data of the video title, the video editor 602 will refer to the meta data mdt of the video title in the file M1a in the temporary memory M1, and execute similar processes to those in the aforementioned embodiments if the entire video data introduction data or chapter introduction data (main video data commentary) of the main video data exists in the meta data mdt. These processes will not be described any longer.

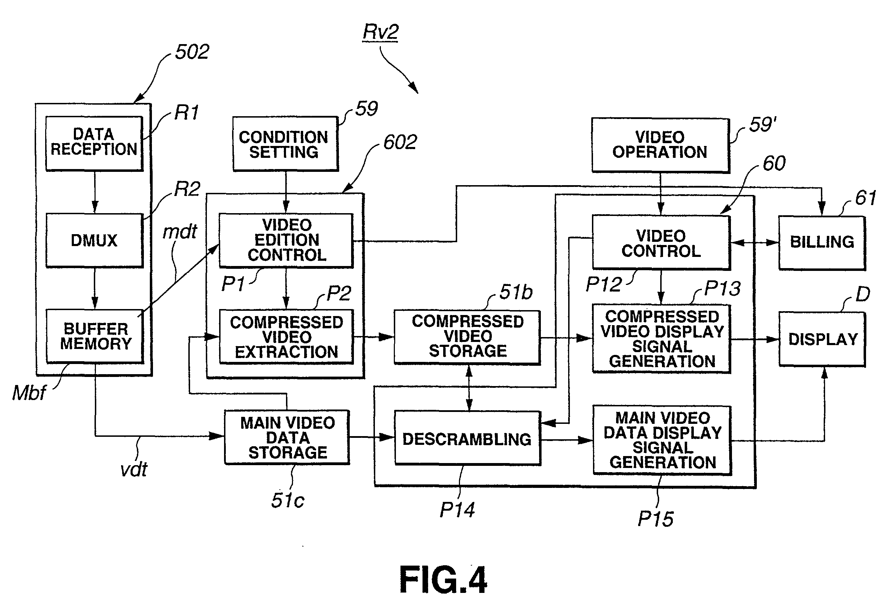

The construction of the video data receiver Rv2 will further be described below with reference to the block diagram in FIG. 4:

As shown, the reception unit 502 includes a data reception block R1 consisting of a tuner circuit, high frequency circuit, etc., a demultiplexer (DMUX) R2 to demultiplex a received signal into the main video data vdt and meta data mdt, and a buffer memory Mbf to buffer the demultiplexed main video data vdt and meta data mdt.

The main video data vdt and meta data mdt buffered in the buffer memory Mbf are transferred to a regular video storage 51c, in FIG. 3, to store the main video data while the meta data mdt is transferred to the temporary memory (RAM) M1 in FIG. 3. Then, they will be accessed by the video editor P1.

The video editor 602 includes a video edition control unit P1 to control the edition of the compressed video, that is, previewed video, and a compressed video extraction unit P2 to extract partial videos from the main video data.

The video edition control unit P1 accepts a command from a condition setting unit (or remote controller) 59. While accessing the meta data mdt, the video edition control unit P1 sends control data to the compressed video extraction unit P2, and a billing command to the billing processor 61.

Based on the control data sent from the video edition control unit P1, the compressed video extraction unit P2 extracts partial videos concerned from the main video data vdt read from the regular video storage 51c, and stores them one after another into the preview video storage 51b, in FIG. 3, to store the compressed video.

The video manipulator 60 includes a video control unit P12 to control videos, a compressed video display signal generator P13 to read partial videos from the compressed video storage 51b according to the control data sent from the video control unit P12 and produce a display signal, a descrambling unit P14 to descramble the main video data vdt read from the regular video storage 51c according to the control data sent from the video control unit P12, and a main video data display signal generator P15 to produce a display signal for the main video data according to the descrambled data.

The majority of components of the video manipulator 60 are formed as programs to process digital data. Of them, parts of the compressed video display signal generator P13 and regular video display signal generator P15, respectively, form a circuit to process analog data.

The video control unit P12 accepts a command from a video operation unit (or remote controller) 59', and sends control data to the descrambling unit P14 and compressed video display signal generator P13. It will further transfer data to and from the billing processor 61.

According to the control data supplied from the video control unit P12 and which designates a preview video display, the compressed video display signal generator P13 sends preview video data read from the compressed video storage 51b to the descrambling unit P14 and receives descrambled preview video data via the compressed video storage 51b, whereby it produces a display signal and sends it to the display unit D on which thus the preview video will be displayed.

According to a control command for display of the main video data or preview video from the video control unit P12, the descrambling unit P14 descrambles the main video data read from the main video data storage 51c or preview video data read from the compressed video storage 51b. It sends the descrambled main video data to the main video data display signal generator P15 which will generate a main video data display signal based on the descrambled main video data and send it to the display unit D at which the main video data will thus be displayed. The descrambled preview video data is sent to the compressed video storage 51b.

The video data receiver Rv2 constructed as in the above functions as will be described below:

Firstly, the main video data vdt and meta data mdt are captured by separating the main video data vdt and meta data mdt the reception unit 502 has received via the transmission/reception mechanism 20 and bringing them into the large capacity storage unit 51.

Secondly, a preview video of a video title defined by the user is edited and displayed as will be described below:

Namely, the video editor 602 accepts a user's command as to the preview video, extracts from the main video data vdt video parts corresponding to the user's command one after another, edits a preview video pv and displays it via the video manipulator 60.

At every edition or display of the preview view pv, a command is sent to the billing processor 61 to bill for the preview video pv. At this time, if the billing unit price varies depending upon the disclosure level of the preview video, the video editor 602 refers to the meta data mdt, and send billing level data to the billing processor 61. Also, the video editor 602 will record the edited preview video pv to the large capacity storage unit 51 when necessary.

Thirdly, based on the user's command, the main video data of the video title is continuously played back and displayed as will be described below:

When the user enters a command for his desired video title and purchase of the main video data, the video editor 602 will check whether the main video data vdt of the video title is prepared in the main video data file 51c in the large capacity storage unit 51. When the main video data vdt is found prepared, the video editor 602 will send a command to the video manipulator 60 which in turn will start playback and display of the main video data vdt. Also, the video editor 602 sends a command to the billing processor 61 which will bill the user on an all-at-once base or correspondingly to the progress of the playback and display before descrambling the main video data vdt. At this time, if the billing unit price varies depending upon the rank (or level) of the video title, the video editor 602 will refer to the meta data mdt and sends billing level data to the billing processor 61.

Fourthly, an introductory video can also be edited and displayed based on the introductory data of the user-defined video title. In this case, however, it is necessary that an introductory data of the entire mein video data or an introductory data of each chapter of the main video data (main video data commentary) has been prepared as the meta data mdt.

Based on a command entered by the user or on the introductory data of the entire main video data or of each chapter, the video editor 602 will extract an introductory data concerned from the meta data mdt to edit an introductory video and display it via the video manipulator 60. Also, the edited introductory video is recorded to the large capacity storage unit 51 as necessary. Further, a command is sent to the billing processor 61 to bill the user for the introductory video if necessary.

In this second embodiment, both the main video data and meta data can be received at the same time. Thereby, the main video data and meta data of the video title can easily be made to correspond to each other, so no confusion with a main video data and meta data of other video title will not take place. Also, based on the received meta data, a specific partial video can be extracted from the simultaneously received main video data immediately after the reception.

With reference to predetermined data about shots or scenes included in the received meta data, only the specific shots or scenes can be extracted from the received main video data to edit a preview video, and thus it is possible to consider the content of a main video data before purchasing the latter for appreciation.

By the recent advanced information technology, an integrated receiver/decoder (IRD) connected to a large capacity storage unit (an integrated assembly of a hard disc, digital recording tape and RAM), or a home server incorporating the IRD function, has been made practically usable.

The above home server can also be used very effectively as the video data receiver as in the present invention.

The home server will automatically record the main video data of a preselected program along with a meta data with a semantic code to the homer server. The program preselection may be done by the user defining each video title in advance or by the home server filtering programs based on user's favorite genre and casting as well as the attribute data of the programs. Further, the home server can automatically select and record some programs as recommendable ones for specific viewers by judging based on the viewing histories of the viewers.

For example, the home server separates, by MDUX, a semantic code received as included in the leading part of a program, stores it into the incorporated RAM, and captures into the main video data storage a main video data having also been separated. During capture into the main video data storage or after the capture, the main video data is cut into shots or scenes to organize a preview video in real time according to the semantic code, and are stored as preview videos into the preview video storage.

The user views preview videos of captured some video titles one after another, compares them with each other, selects his desired video title, and then purchases it following a purchase procedure displayed on the screen. When the user has made the purchase procedure, the home server will descramble the main video data to enable the user to view the entire main video data of the video title.

Also, with the function of the billing system, only a title or titles the user has selected from among the pre-stored program titles can be descrambled for billing.

Therefore, simultaneously with the descrambling, a billing flag is set at the program code so that when the billing processor uplinks data from the center, billing data can be conveyed along with an ID code of a terminal to the center.

### (2) Transmission and reception of main video data, meta data and video editor, of which the latter two are appended to main video data

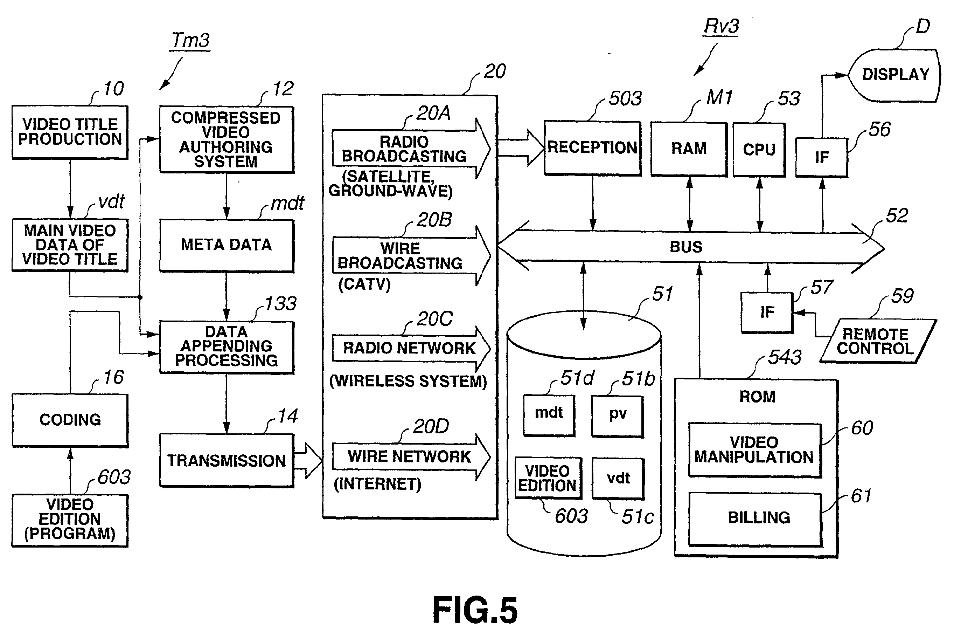

Referring now to FIG. 5, third embodiments of the video data transmitter and receiver, respectively, according to the present invention are illustrated in the form of a block diagram. Note that the same or similar elements as or to those in FIGS. 1 and 3 are indicated with the same or similar references as those in FIGS. 1 and 3 and will not be described any longer.

The video data transmitter Tm3 according to the third embodiment includes a video title editor 10, compressed video authoring system 12, data appending processor 133, transmitting unit 14 and a coding processor 16.

The coding processor 16 codes, by data compression and the like, a video editor 603 formed as a program readable and executable by a computer, and sends it to the data appending processor 133. The video editor 603 refers to a meta data mdt to extract a predetermined partial video from a main video data vdt. The meta data mdt includes shot/scene data, correlation data, billing command, etc.

The data appending processor 133 functions to edit a signal by appending to the main video data vdt of a video title provided from the video title editor 10 meta data mdt provided from the compressed video authoring system 12 and in addition a coded video editor sent from the coding processor 16, and send it to the transmission unit 14.

The transmission unit 14 has a function to process the signal sent from the data appending processor 133 by modulation or the like, and send it via the predetermined transmission/reception mechanism 20 at a designated time.

The video data transmitter Tm3 thus constructed functions as will be described below:

The video title editor 10 having the video edition function edits a material video film to produce a digital main video data vdt and supplies it to the compressed video authoring system 12 and data appending processor 133. Then, the compressed video authoring system 12 will effect an authoring based on the main video data vdt, edit a semantic code as a meta data mdt and supply it to the data appending processor 133. On the other hand, the coding processor 16 will supply the coded video editor to the data appending processor 133.

The data appending processor 133 appends to the main video data vdt the meta data mdt and coded video editor to edit a signal, and thus send it to the transmission unit 14. The transmission unit 14 will process the signal by modulation or the like at a designated time, and transmit it via the predetermined transmission/reception mechanism 20 such as a satellite broadcasting or ground wave broadcasting.

For example, a program custom-making company will append the meta data mdt in the form of a semantic code and coded video editor to a leading part of the main video data vdt at the stage of broadcasting, and transmit them.

Then, the main video data vdt in consideration having the meta data mdt and coded video editor appended thereto is transmitted via the predetermined transmission/reception mechanism. Thus, the main video data vdt and meta data mdt, and the coded video editor also, can be supplied to the receiving side. Thus, a video data transmission/reception mechanism can be realized which will not have the receiving side prepare any data.

Also, at the time of transmission, the main video data vdt, meta data mdt and the coded video editor can easily be made to correspond to each other, and no confusion will take place between them. Further, the transmission can be done with simpler operations.

As in the above, the compressed video authoring system 12 is provided to edit meta data, whereby operations from edition of meta data to transmission thereof can be effected in series. Thus, meta data can be edited and transmitted instantly. Further, since predetermined data concerning shots or scenes included in the meta data can instantly be extracted at the receiving side, data consisting of only predetermined shots or scenes in the transmitted main video data and which are used to edit a video can instantly be transmitted to the receiving side.

Similarly, the coding processor 16 is provided to edit the coded video editor. Thus, the video editor can be coded instantly and sent instantly to the receiving side.

The video data receiver Rv3 will further be describe herebelow.

The video data receiver Rv3 according to the third embodiment of the present invention includes a bus 52 and, as connected to the bus 52 for signal transmission and reception to and from the bus 52, a CPU 53, temporary memory M1, ROM 543, reception unit 503, large capacity storage unit 51, a display unit D via an interface 56, and a remote controller 59 via an interface 57.

Further, the video data receiver Rv3 may include a MemoryStick connected to the bus 52 via an interface and drive unit as in the aforementioned embodiments (as shown in FIG. 1).

In the ROM 543, there are stored a video manipulator 60 and a billing processor 61 both as programs readable and executable by the CPU 53.

The reception unit 503 receives, via the transmission/reception mechanism 20, a signal of the main video data vdt, meta data mdt and coded video editor, of which the latter two are appended to th main video data vdt, transmitted from the video data transmitter Tm3, and records the separated main video data vdt to the main video data file 51c in the large capacity storage unit 51. Further, the reception unit 503 will record the separated meta data mdt to a meta data file 51d in the large capacity storage unit 51. Alternatively, the reception unit 503 will record the meta data mdt to the MemoryStick (not shown).

Further the reception unit 503 decodes the coded video editor to provide a video editor 603 being a program which can be read and executed by the CPU 53, and records it to the large capacity storage unit 51.

The remote controller 59, video manipulator 60 and billing processor 61 are similar in construction and function to those in the aforementioned embodiments.

The video editor 603 recorded in the large capacity storage unit 51 is read and executed by the CPU 53 to accept a command entered by the user. When it is supplied with a command for a video title, it will confirm whether the main video data vdt of the video title exists in the main video data file 51c of the large capacity storage unit 51, and then whether the meta data mdt of the video title exists in the meta data file 51d in the large capacity storage unit 51.

When both the above exist, the meta data mdt is transferred from the meta data file 51d to the temporary memory M1 and it is taken as a file M1a.

Next, the video editor 603 is supplied with a next command from the user via the remote controller 59.

If the user's command is to continuously play back the main video data vdt of the video title, the video manipulator 60 is immediately triggered and the subsequent control is passed to the video manipulator 60 since it has already been confirmed that the main video data vdt of the video title exists in the main video data file 51c in the large capacity storage unit 51.

When the user wants to display a preview video, he enters a command for his desired preview video mode. Further, the user enters a command for a level of disclosure of the preview video in some cases. The disclosure level of the preview video is commanded by entering a threshold. Note that the threshold will form at least a part of the conditions under which a video is partially extracted from the regular video vdt and partial videos meeting the conditions will be extracted.

Also, when no threshold is defined by the user, a predetermined default will be applied.

According to the command, the video editor 603 will refer to the meta data mdt of the video title in th file M1a in the temporary memory M1, extract partial videos conforming to the threshold and meeting the other conditions one after another from the main video data vdt recorded in the main video data file 51c in the large capacity storage unit 51, edit a preview video data (preview video) and send it to the image manipulator 60. These data will be displayed on the display unit D via the image manipulator 60 as preview videos being in the user's desired mode and at the disclosure level.

When billing the user for display of the preview video, the video editor 603 will send a billing command to the billing processor 61 to effect the billing. When billing by the disclosure level of the preview video, the video editor 603 will send a disclosure level data to the billing processor 61 which will bill the user by the disclosure level.

The video editor 603 can also record the edited preview video pv to the preview video data file 51b in the large capacity storage unit 51.

The billing for reuse of the preview video data pv thus recorded depends upon the agreement with the user. Normally, if billing has been made at the time of preview video edition or production, no billing will be made at the reuse of the preview video. On the other hand, if no billing has been made at the time of preview video edition or production, billing will be made at every reuse of the preview video.

When the user's command is to display the entire main video data introduction data or chapter introduction data of the video title, the video editor 602 will refer to the meta data mdt of the video title in the file M1a in the temporary memory M1, and execute similar processes to those in the aforementioned embodiments if the entire video data introduction data or chapter introduction data (main video data commentary) of the main video data exists in the meta data mdt. These processes will not be described any longer.

In the foregoing, the video editor 603 has been described on the assumption that it is recorded in the large capacity storage unit 51. However, the present invention is not limited to this example, but taking its capacity in account, the video editor 603 may be partially or totally transferred to a high-speed compact disc drive whose seek/access speed is higher, DRAM or the like.

Similarly, judging from the data characteristic of the meta data mdt used in the present invention, at least a part of its content may be shifted to a cache memory which will be accessed as necessary.

The video data receiver Rv3 constructed as in the above functions as will be described below:

Firstly, the main video data vdt, meta data mdt and coded video editor are captured by separating the main video data vdt, meta data mdt and coded video data the reception unit 503 has received via the transmission/reception mechanism 20 and bringing them into the large capacity storage unit 51.

Note that the coded video editor is decoded in the above course of operations, and recorded as a video editor 603.

Secondly, a preview video of a video title defined by the user is edited and displayed.

Namely, the video editor 603 accepts a user's command as to the preview video, extracts from the main video data vdt video parts corresponding to the user's command one after another, edits a preview video pv and displays it via the video manipulator 60.

At every edition or display of the preview view pv, a command is sent to the billing processor 61 to bill for the preview video pv. At this time, if the billing unit price varies depending upon the disclosure level of the preview video, the video editor 603 refers to the meta data mdt, and sends billing level data to the billing processor 61. Also, the video editor 603 will record the edited preview video pv to the large capacity storage unit 51 when necessary.

Thirdly, based on the user's command, the main video data of the video title is continuously played back and displayed as will be described below:

When the user enters a command for his desired video title and purchase of the main video data for appreciation, the video editor 603 will check whether the main video data vdt of the video title is prepared in the main video data file 51c in the large capacity storage unit 51. When the main video data vdt is found prepared, the video editor 603 will send a command to the video manipulator 60 which in turn will start playback and display of the main video data vdt. Also, the video editor 603 sends a command to the billing processor 61 which will bill the user on an all-at-once base or correspondingly to the progress of the playback and display before descrambling the main video data vdt. At this time, if the billing unit price varies depending upon the rank (or level) of the video title, the video editor 603 will refer to the meta data mdt and sends billing level data to the billing processor 61.

Fourthly, an introductory video can also be edited and displayed based on the introductory data of the user-defined video title. In this case, however, it is necessary that an introductory data of the entire mein video data or an introductory data of each chapter of the main video data (main video data commentary) has been prepared as the meta data mdt.

Based on a command entered by the user or on the introductory data of the entire main video data or of each chapter, the video editor 603 will extract an introductory data concerned from the meta data mdt to edit an introductory video and display it via the video manipulator 60. Also, the edited introductory video is recorded to the large capacity storage unit 51 as necessary.

Further, a command is sent to the billing processor 61 to bill the user for the introductory video if necessary.

In this third embodiment, both the main video data and meta data can be received at the same time. Thereby, the main video data and meta data of the video title can easily be made to correspond to each other, so no confusion with a main video data and meta data of other video title will not take place. Also, operations for video data reception can easily be done.

With the execution of the received video editor (program), specific partial videos can be extracted from the simultaneously received main video data immediately after the reception. Thus it is possible to consider the content of a main video data before purchasing the latter for appreciation.

### (3) Transmission and reception of main video data and meta data, of which one is appended to the other

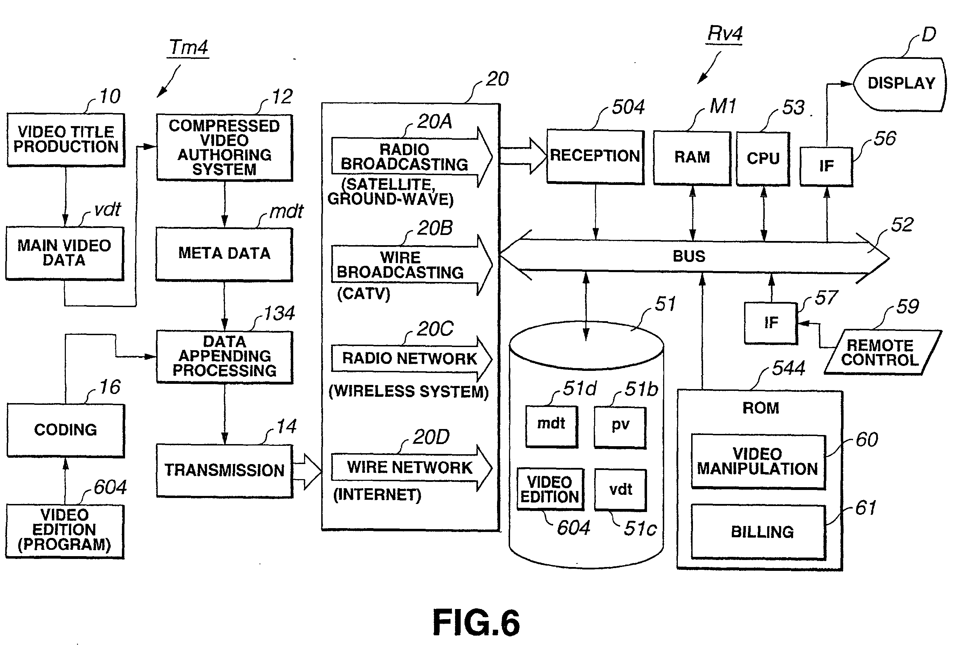

Referring now to FIG. 6, fourth embodiments of the video data transmitter and receiver, respectively, according to the present invention are illustrated in the form of a block diagram. Note that the same or similar elements as or to those in FIGS. 1, 3 and 5 are indicated with the same or similar references as those in FIGS. 1,3 and 5 and will not be described any longer.

The video data transmitter Tm4 according to the third embodiment includes a video title editor 10, compressed video authoring system 12, data appending processor 134, transmitting unit 14 and a coding processor 16.

The coding processor 16 codes, by data compression and the like, a video editor 604 formed as a program readable and executable by a computer, and sends it to the data appending processor 134. The video editor 604 has a function to refer to a meta data mdt, read data to identify the main video data (for example, text data or still picture to introduce the entire video data and each chapter thereof) and extract a predetermined partial video from the main video data vdt. Note that the meta data mdt includes shot/scene data, correlation data, billing command, etc.

The data appending processor 134 functions to edit a signal by appending to the meta data mdt provided from the compressed video authoring system 12 and a coded video editor sent from the coding processor 16, and send it to the transmission unit 14.

The transmission unit 14 has a function to process the signal sent from the data appending processor 134 by modulation or the like, and send it via the predetermined transmission/reception mechanism 20 at a designated time.

The video data transmitter Tm4 thus constructed functions as will be described below. The video title editor 10 having the video edition function edits a material video film to produce a digital main video data vdt and supplies it to the compressed video authoring system 12 and data appending processor 133. Then, the compressed video authoring system 12 will effect an authoring based on the main video data vdt, edit a semantic code as a meta data mdt and supply it to the data appending processor 134.

On the other hand, the coding processor 16 will supply the coded video editor to the data appending processor 134.

The data appending processor 134 appends the coded video editor to the meta data mdt to edit a signal, and thus send it to the transmission unit 14. The transmission unit 14 will process the signal by modulation or the like at a designated time, and transmit it via the predetermined transmission/reception mechanism 20 such as a satellite broadcasting or ground wave broadcasting.

For example, a program custom-making company will append the coded video editor to the meta data mdt in the form of a semantic code for transmission of the video data by data broadcasting.

Then, the meta data mdt of the main video data vdt in consideration having the coded video editor appended thereto is transmitted via the predetermined transmission/reception mechanism. Thus, the meta data mdt, and the coded video editor also, can be supplied to the receiving side. Thus, a video data transmission/reception mechanism can be realized which will not have the receiving side prepare any data.

Also, at the time of transmission, the meta data mdt and coded video editor can easily be made to correspond to each other, and thus no confusion will take place between them. Further, the transmission can be done with simpler operations.

As in the above, the compressed video authoring system 12 is provided to edit meta data, whereby operations from edition of meta data to transmission thereof can be effected in series. Thus, meta data can be produced and transmitted instantly. Further, since predetermined data concerning shots or scenes included in the meta data can instantly be extracted at the receiving side, data consisting of only predetermined shots or scenes in the transmitted main video data and which are used to edit a video can instantly be transmitted to the receiving side.

Similarly, the coding processor 16 is provided to organize the coded video editor. Thus, the video editor 604 can be coded instantly and sent instantly to the receiving side.

Further, it is possible to supply to the receiving side data for identify a main video data included in the meta data and supply various information on the main video data to the receiving side. That is, a knowledge concerning the main video data can be supplied to the receiving side without having to use the main video data.

The video data receiver Rv4 will further be describe herebelow.

The video data receiver Rv4 according to the fourth embodiment of the present invention includes a bus 52 and, as connected to the bus 52 for signal transmission and reception to and from the bus 52, a CPU 53, temporary memory M1, ROM 544, reception unit 504, large capacity storage unit 51, a display unit D via an interface 56, and a remote controller 59 via an interface 57.

Further, the video data receiver Rv3 may include a MemoryStick (not shown) connected to the bus 52 via an interface and drive unit as in the aforementioned embodiments (as shown in FIG. 1).

In a ROM 544, there are stored a video manipulator 60 and a billing processor 61 both as programs readable and executable by the CPU 53.

The reception unit 504 receives, via the transmission/reception mechanism 20, a signal of the meta data mdt and coded video editor appended to the meta data mdt, transmitted from the video data transmitter Tm4, and records the separated meta data mdt to the meta data file 51d in the large capacity storage unit 51. Alternatively, the reception unit 504 will record the meta data mdt to the MemoryStick (not shown).

Further the reception unit 504 decodes the coded video editor to provide a video editor 604 being a program readable and executable by the CPU 53, and records it to the large capacity storage unit 51.

Further the reception unit 504 records a separately received or acquired main video data vdt into the main video data file 51c in the large capacity storage unit 51.

The main video data vdt is a one having been separately transmitted from the video data transmitter Tm4 and received by the reception unit 504, a one having been transmitted from any other transmission system (broadcasting system or network) and received by the reception unit 504, or a one acquired from a package system such as a disc or the like.

The remote controller 59, video manipulator 60 and billing processor 61 are similar in construction and function to those in the aforementioned embodiments.

The video editor 604 recorded in the large capacity storage unit 51 is read and executed by the CPU 53 to accept a command entered by the user. When it is supplied with a command for a video title, it will confirm whether the main video data vdt of the video title exists in the main video data file 51c of the large capacity storage unit 51, and then whether the meta data mdt of the video title exists in the meta data file 51d in the large capacity storage unit 51.

When both the above exist, the meta data mdt is transferred from the meta data file 51d to the temporary memory M1 and it is taken as a file M1a.

Next, the video editor 604 is supplied with a next command from the user via the remote controller 59.

If the user's command is to continuously play back the main video data vdt of the video title, the video manipulator 60 is immediately triggered and the subsequent control is passed to the video manipulator 60 since it has already been confirmed that the main video data vdt of the video title exists in the main video data file 51c in the large capacity storage unit 51.

When the user wants to display a preview video, he enters a command for his desired preview video mode. Further, the user enters a command for a level of disclosure of the preview video in some cases. The disclosure level of the preview video is commanded by entering a threshold. Note that the threshold will form at least a part of the conditions under which a video is partially extracted from the regular video vdt and partial videos meeting the conditions will be extracted. Also, if no threshold is defined by the user, a predetermined default will be applied.

According to the command, the video editor 604 will refer to the meta data mdt of the video title in th file M1a in the temporary memory M1, extract partial videos conforming to the threshold and meeting the other conditions one after another from the main video data vdt recorded in the main video data file 51c in the large capacity storage unit 51, edit a preview video data (preview video) and send it to the image manipulator 60. These data will be displayed on the display unit D via the image manipulator 60 as preview videos being in the user's desired mode and at the disclosure level.

When billing the user for display of the preview video, the video editor 604 will send a billing command to the billing processor 61 to effect the billing. When billing by the disclosure level of the preview video, the video editor 604 will send a disclosure level data to the billing processor 61 which will bill the user by the disclosure level.

The video editor 604 can also record the edited preview video pv to the preview video data file 51b in the large capacity storage unit 51.

The billing for reuse of the preview video data pv thus recorded depends upon the agreement with the user. Normally, if billing has been made at the time of preview video edition or production, no billing will be made at the reuse of the preview video. On the other hand, if no billing has been made at the time of preview video edition or production, billing will be made at every reuse of the preview video.

When the user's command is to display the entire main video data introduction data or chapter introduction data of the video title, the video editor 604 will refer to the meta data mdt of the video title in the file M1a in the temporary memory M1, and execute similar processes to those in the aforementioned embodiments if the entire video data introduction data or chapter introduction data of the main video data exists in the meta data mdt. These processes will not be described any longer.

In the foregoing, the video editor 604 has been described on the assumption that it is recorded in the large capacity storage unit 51. However, the present invention is not limited to this example, but taking its capacity in account, the video editor 603 may be partially or totally transferred to a high-speed compact disc drive whose seek/access speed is higher, DRAM or the like.

Similarly, judging from the data characteristic of the meta data mdt used in the present invention, at least a part of its content may be shifted to a cache memory which will be accessed as necessary.

The video data receiver Rv4 constructed as in the above functions as will be described below:

Firstly, the meta data mdt and coded video editor are captured by separating the meta data mdt and coded video data the reception unit 504 has received via the transmission/reception mechanism 20 and bringing them into the large capacity storage unit 51. Note that the meta data mdt includes the main video data commentary, shot/scene data, correlation data, billing command, etc.

Note that the coded video editor is decoded in the above course of operations, and recorded as a video editor 604.

Further, the main video data vdt is captured separately, and stored into the large capacity storage unit 51.

Secondly, an introductory video based on the introductory data of a video title defined by the user is edited and displayed.

Based on the user's definition of whether the entire main video data or each chapter is to be introduced, the video editor 604 will extract a corresponding introductory data from the meta data mdt to edit an introductory video, and display the introductory video via the video manipulator 60. Also, the video editor 604 will record the edited introductory video into the large capacity storage unit 51 as necessary.

Further, the video editor 604 can also send a command to the billing processor 61 which in turn will bill the user for the introductory video when necessary.

Thirdly, a preview video of a user-defined video title is edited and displayed as will be described below:

Namely, the video editor 604 accepts a user's command as to the preview video, extracts from the main video data vdt video parts corresponding the user's command one after another, edits a preview video pv and displays it via the video manipulator 60.

At every edition or display of the preview view pv, a command is sent to the billing processor 61 to bill for the preview video pv. At this time, if the billing unit price varies depending upon the disclosure level of the preview video, the video editor 604 refers to the meta data mdt, and sends billing level data to the billing processor 61.

Also, the video editor 604 will record the edited preview video pv to the large capacity storage unit 51 when necessary.

Fourthly, based on the user's command, the main video data of the video title is continuously played back and displayed as will be described below:

When the user enters a command for his desired video title and purchase of the main video data for appreciation, the video editor 604 will check whether the main video data vdt of the video title is prepared in the main video data file 51c in the large capacity storage unit 51. When the main video data vdt is found prepared, the video editor 604 will send a command to the video manipulator 60 which in turn will start playback and display of the main video data vdt. Also, the video editor 604 sends a command to the billing processor 61 which will bill the user on an all-at-once base or correspondingly to the progress of the playback and display before descrambling the main video data vdt. At this time, if the billing unit price varies depending upon the rank (or level) of the video title, the video editor 604 will refer to the meta data mdt and sends billing level data to the billing processor 61.

In the fourth embodiment, the meta data and video editor can be received together simultaneously.

Thus, the meta data of a video title and video editor can easily be made to correspond to each other and no confusion will take place between a meta data and video editor of other video title. Also, operations for data reception can be effected easily.

Further, the received video editor (program) is executed to extract and display introductory data about the entire main video data or each chapter included in the received meta data and which is to identify the main video data, whereby a knowledge concerning the main video data can be acquired without having to use the main video data.

Further, immediately after the reception of the meta data, a predetermined partial video can be extracted from a previously prepared main video data to edit and display a preview video. Therefore, the content of the main video data can be considered based on the preview video before purchasing the main video data for appreciation.

In the foregoing, the embodiments of the present invention adapted to receive video data via the broadcasting or network system have been described.

Next, embodiments of the present invention adapted to receive video data via the packaged media will be described.

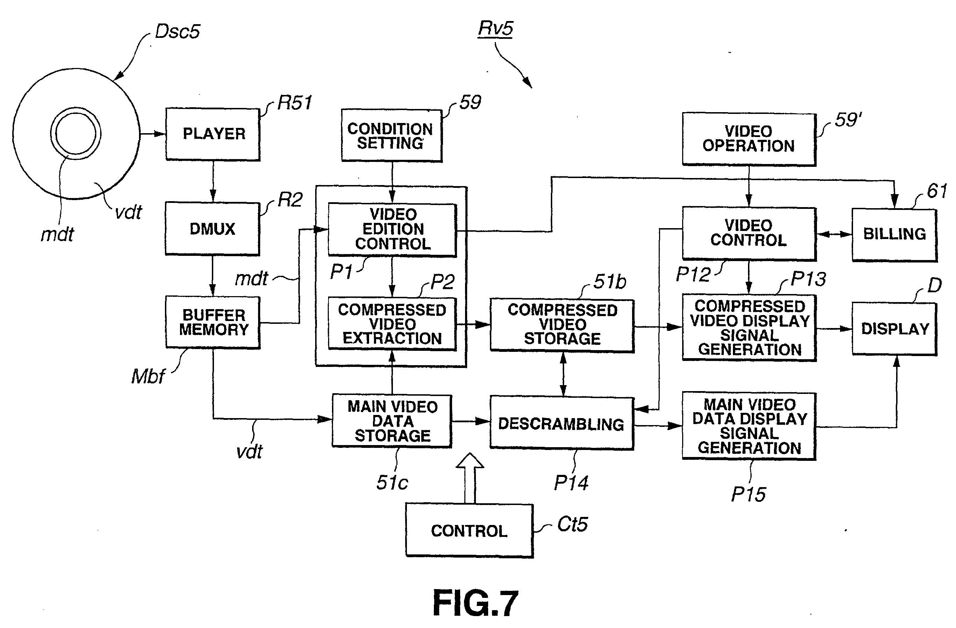

Referring now to FIG. 7, a fifth embodiment of the video data receiver according to the present invention is illustrated in the form of a block diagram. The video data receiver according to the fifth embodiment is generally indicated with a reference Rv5. The video data receiver Rv5 receives and plays back main video data vdt and meta data mdt represented by a semantic code recorded together in a disc medium Dsc5 in which a video title is recorded such as CD, DVD or the like.

In the disc medium Dsc5, the semantic code is recorded adjacent to TOC (table of contents, not shown) at the lead-out side or as a part of the TOC.

The video data receiver Rv5 includes a controller Ct5 provided with a control program and a CPU to control the entire system, player R51 consisting of a playback circuit etc. to read data from the disc medium Dsc5, demultiplexer (DMUX) R2 to demultiplex the read data into the main video data vdt and meta data mdt, and a buffer memory Mbf to buffer the separated main video data vdt and meta data mdt.

The main video data vdt buffered in the buffer memory Mbf is transferred into the main video data storage 51c provided as a file in the hard disc whose access time is high (not shown) under the control of the controller Ct5, and the meta data mdt is transferred to a temporary memory (not shown) and then accessed by a video edition control unit P1.

Note that incase the seek time of a playback mechanism (not shown) for the disc medium Dsc5 is sufficiently short, the main video data vdt can also be real-time read directly from the disc medium Dsc5 without being stored into the main video data storage 51c. However, the video data receiver Rv5 will be described below concerning a playback mechanism using the main video data storage 51c provided as a file in a hard disc having a short access time.

The video data receiver Rv5 further includes the video edition control unit P1, a compressed video extraction unit P2, video control unit P12, compressed video display signal generator P13, descrambling unit P14, main video data display signal generator P15, billing processor 61 and a display unit D.

The video edition control unit P1 is provided to control the edition of a compressed video, that is, a preview video. It accepts a command from a condition setting unit (or remote controller) 59, sends control data to the compressed video extraction unit P2 while accessing the meta data mdt from the temporary memory (not shown), and a command to the billing processor 61.

The compressed video extraction unit P2 is provided to extract partial videos from the main video data vdt. According to the control data sent from the video edition control unit P1, the compressed video extraction unit P1 will extract partial videos concerned from the main video data vdt read from the main video data storage 51c, and store them into the compressed video storage 51b. The compressed video storage 51b may be formed as a separate file in the one and same hard disc in which the main video data storage 51c is formed.

The video control unit P12 is provided to control video. Receiving a command from the video operation unit (or remote controller) 59', the video control unit P12 sends control data to the descrambling unit P14 and compressed video display signal generator P13. Further, the video control unit P12 transmits and receives data to and from the billing processor 61.

According to control data for display of a preview video, supplied from the video control unit P12, the compressed video display signal generator P13 sends preview video data read from the compressed video storage 51b to the descrambling unit P14, The compressed video display signal generator P13 further receives a descrambled video data via the compressed video storage 51b to generate a display signal and sends it to the display unit D.

According to control data for display of a main video data or a preview video, supplied from the video control unit P12, the descrambling unit P14 follows control data for display of a main video data or preview video data to descramble a main video data read from the main video data storage 51c or a preview video data read from the compressed video storage 51b. The descrambling unit P14 sends the scrambled main video data to the main video data display signal generator P15 while sending the descrambled preview video data to the compressed video storage 51b.

The main video data display signal generator P15 generates a main video data display signal based on the descrambled data from the descrambling unit P14 and sends it to the display unit D to display the main video data.

The billing processor 61 is nearly the same as the billing processor 61 shown in FIG. 4, and will not be described any further.

The video data receiver Rv5 constructed as in the above functions as will be described below:

The player R51 plays the disc medium Dsc5 to read data from it, the demultiplexer (DMUX) R2 demultiplexes the read data into the main video data vdt and a semantic code being the meta data mdt, and buffers them into the buffer memory Mbf.

Further the main video data vdt is transferred from the buffer memory Mbf to the main video data storage 51c. Next, the video edition control unit P1 refers to the semantic code in a mode (preview video mode) defined by the user via the condition setting unit 59 to search shots or scenes to be extracted and which conform to predetermined extracting conditions, reads time code data of shots and codes concerned (start and end points of the shots or scenes), and sends it to the compressed video extraction unit P2.

Based on the time code data, the compressed video extraction unit P2 extract from the main video data vdt stored in the main video data storage 51c shots or scenes between the start and end points of the shots or scenes, and stores them one after another into the compressed video storage 51b. These operations are repeatedly done to form a full preview video in the user-defined mode in the compressed video storage 51b.

When the full preview video is formed in the compressed video storage 51b, the compressed video display signal generator P13 sends it to the descrambling unit P14 which in turn will descramble the full preview video to generate a preview video display signal and display the full preview video on the display unit D. As in the above, a preview video can be viewed in various modes before purchasing the main video data for appreciation.

Note that when the shots or scenes are stored consecutively into the compressed video storage 51b, they may be descrambled one after another by the descrambling unit P14.

In the above process, for billing for the edition or playback of the preview video, the video edition control unit P1 will send a corresponding billing command to the billing processor 61.

In the above, all shots or scenes concerned are extracted from the entire main video data, stored once into the compressed video storage 51b and the full preview video is formed therein, and then displayed. Alternatively, however, each time shots or scenes are extracted, they can immediately be displayed without being stored once in the compressed video storage 51b.

In the latter case, for a period until completion of the playback of the shots or scenes, the video edition control unit P1 refers to the semantic code to search next shots or scenes to be extracted and read time code data of the shots or scenes in consideration (start and end points thereof), and controls the player R51 so that the next shots or scenes extracted from the main video data, existing between the start and end points can be played back upon completion of the playback of the current shots or scenes. Thus, before purchasing the main video data for appreciation, a preview video can be viewed in various modes, whereby it is decided whether or not to purchase the entire main video data for appreciation.

When the user has viewed the preview video and decided to purchase the entire main video data for appreciation, the main video data vdt will be reproduced for display as will be described below:

When the user enters a command for continuous playback of the main video data vdt by operating the video operation unit 59', the video control unit P12 will receive the command and send a main video data descrambling start command to the descrambling unit P14, The descrambling unit P14 will read data one after another from the main video data storage 51c, descramble the data, and supply the descrambled data to the main video data display signal generator P15, The main video data display signal generator P15 generates a display signal based on the data supplied thereto, and the display unit D displays the display signal. On the other hand, the video control unit P12 sends a billing command for playback of the main video data to the billing processor 61.

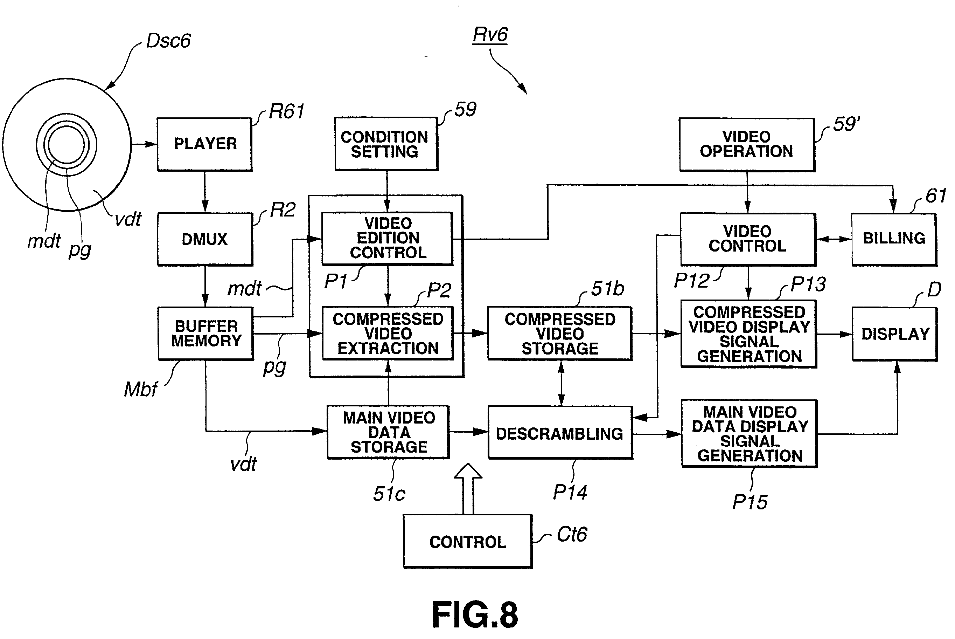

Referring now to FIG. 8, a sixth embodiment of the video data receiver according to the present invention is illustrated in the form of a block diagram. The video data receiver according to the fifth embodiment is generally indicated with a reference Rv6. The video data receiver Rv6 receives and plays back main video data vdt, meta data mdt represented by a semantic code and a video editor pg prepared as a program readable and executable by a computer, distributed as recorded together in a disc medium Dsc6 in which a video title is recorded such as CD, DVD or the like.

That is, there is distributed to the user the disc medium Dsc6 having the semantic code as the meta data mdt recorded adjacent to TOC (table of contents, not shown) in the lead-out area thereof or as a part of the TOC, the video editor pg in the lead-in area and the main video data vdt in an area outside the lead-in side.

The video data receiver Rv6 includes a controller Ct6 provided with a control program and a CPU to control the entire system, player R61 consisting of a playback circuit etc. to read data from the disc medium Dsc6, demultiplexer (DMUX) R2 to demultiplex the read data into the main video data vdt and meta data mdt and a video editor pg, and a buffer memory Mbf to buffer the separated main video data vdt, meta data mdt and video editor pg.

The main video data vdt buffered in the buffer memory Mbf is transferred to the main video data storage 51c provided as a file in the hard disc whose access time is high (not shown) under the control of the controller Ct 6 and the meta data mdt is transferred to a temporary memory (not shown) and then accessed by a video edition control unit P1. Further, the video editor pg is developed in a semiconductor memory (DRAM) or nonvolatile memory (SRAM, flash memory or the like) readable and writable at any time by the controller Ct6 or recorded to the hard magnetic disc.

Note that incase the seek time of a playback mechanism (not shown) for the disc medium Dsc6 is sufficiently short, the main video data vdt can also be real-time read directly from the disc medium Dsc6 without being stored into the main video data storage 51c. However, the video data receiver Rv6 will be described below concerning a playback mechanism using the main video data storage 51c provided as a file in a hard disc having a short access time.

The video data receiver Rv6 further includes the video edition control unit P12, compressed video display signal generator P13, descrambling unit P14, main video data display signal generator P15, billing processor 61 and a display unit D.

Note that the same or similar elements as or to those in FIG. 7 are indicated with the same or similar references as those in FIG. 7 will not be described any longer.

The video data receiver Rv6 according to the sixth embodiment functions as will be described below:

The player R61 reads data from the disc medium Dsc6, and the demultiplexer (DMUX) R2 demultiplexes the read data into the main video data vdt, semantic code being the meta data mdt and video editor pg and buffers them into the buffer memory Mbf.

The controller Ct6 transfers the main video data vdt from the buffer memory Mbf to the main video data storage 51c.

Next, the controller Ct6 will transfer the video editor pg from the buffer memory Mbf to a random writable and readable semiconductor memory (DRAM), or develop the video editor pg in a nonvolatile memory (SRAM or flash memory) when it has to be stored for a long time. Further, when it is necessary to reuse the video editor pg, it is recorded to the hard magnetic disc.

The video editor pg developed in a DRAM for example includes a video edition control unit P1 and compressed video extraction unit P2, both being an absolute binary type program readily readable and executable by the CPU. When the video edition control unit P1 and compressed video extraction unit P2 are executed by the CPU provided with the controller Ct6, they will work as in the aforementioned embodiment.

Note that the subsequent operations of the video edition control unit P1, compressed video extraction unit P2, video control unit P12, compressed video display signal generator P13, descrambling unit P14, main video data display signal generator P15, billing processor 61 and display unit D are similar to those in the aforementioned embodiment, and so will not be described any longer.

As a result, a preview video can be edited in various modes and displayed. Thus, the user can view the preview video before purchasing the main video data for appreciation and the result of viewing can be a measure to decide whether or not to purchase the main video data for appreciation.

Also when the user decides to purchase the entire main video data for appreciation, the main video data vdt can smoothly be played back and displayed as in the aforementioned embodiments.

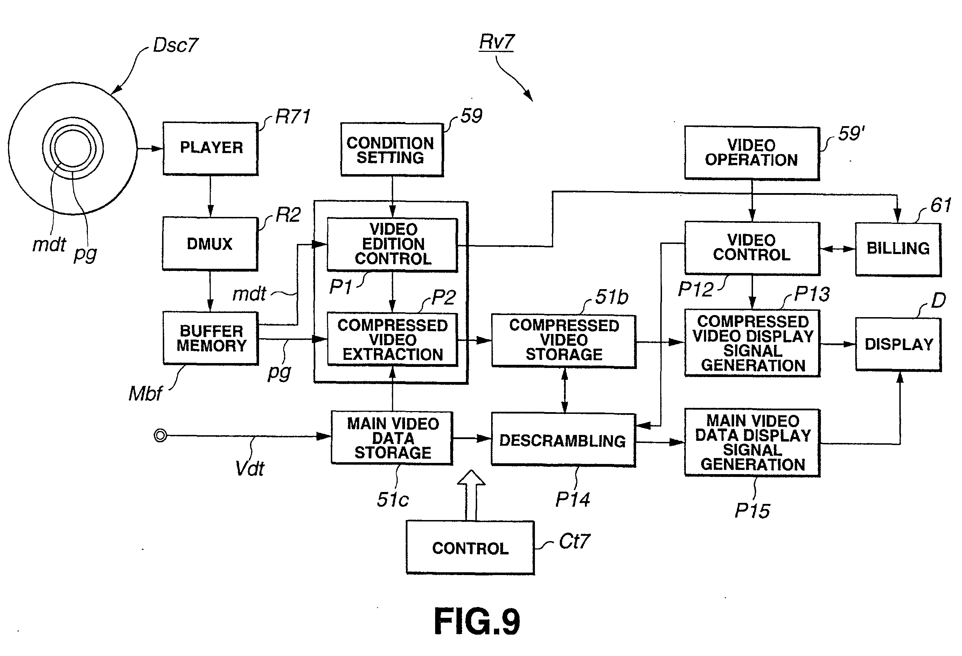

Referring now to FIG. 9, there is illustrated in the form of a block diagram a seventh embodiment of the video data receiver according to the present invention. The video data receiver according to the present invention is generally indicated with a reference Rv7. The video data receiver Rv7 receives and plays back meta data mdt represented by a semantic code and video editor pg prepared as a program code readable and executable by a computer, distributed as recorded together in a disc medium Dsc7 in which digital data is recorded such as CD, MD or the like.

That is, there is distributed to the user the disc medium Dsc7 having the semantic code as the meta data mdt recorded adjacent to TOC (table of contents, not shown) in the lead-out area thereof or as a part of the TOC, and the video editor pg in the lead-in area.

The video data receiver Rv7 includes a controller Ct7 provided with a control program and a CPU to control the entire system, player R71 consisting of a playback circuit etc. to read data from the disc medium Dsc7, demultiplexer (DMUX) R2 to demultiplex the read data into the meta data mdt and video editor pg, and a buffer memory Mbf to buffer the separated meta data mdt and video editor pg.

The meta data mdt buffered in the buffer memory Mbf is transferred to a temporary memory (not shown) and then accessed by the video edition control unit P1. Further, the video editor pg is developed in a semiconductor memory (DRAM) or nonvolatile memory (SRAM, flash memory or the like) readable and writable at any time by the controller Ct7 or recorded to a hard magnetic disc whose access time is short.

Note that incase the seek time of a playback mechanism (not shown) for the disc medium Dsc7 is sufficiently short, the main video data vdt can also be real-time read directly from the disc medium Dsc7 without being stored into the main video data storage 51c. However, the video data receiver Rv7 will be described below concerning a playback mechanism using the main video data storage 51c provided as a file in a hard disc having a short access time.

The video data receiver Rv7 further includes a video edition control unit P12, compressed video display signal generator P13, descrambling unit P14, main video data display signal generator P15, billing processor 61 and a display unit D.

Note that the same or similar elements as or to those in FIG. 7 are indicated with the same or similar references as those in FIG. 7 will not be described any longer.

The video data receiver Rv7 according to the sixth embodiment functions as will be described below:

The player R71 reads data from the disc medium Dsc7, and the demultiplexer (DMUX) R2 demultiplexes the read data into the meta data mdt and semantic code being the meta data mdt and video editor pg and buffers them into the buffer memory Mbf.

Next, the controller Ct7 will transfer the video editor pg from the buffer memory Mbf to a random writable and readable semiconductor memory (DRAM), or develop the video editor pg in a nonvolatile memory (SRAM or flash memory) when it has to be stored for a long time. Further, when it is necessary to reuse the video editor pg, it is recorded to the hard magnetic disc.

The video editor pg developed in a DRAM for example includes a video edition control unit P1 and compressed video extraction unit P2, both being an absolute binary type program readily readable and executable by the CPU. When the video edition control unit P1 and compressed video extraction unit P2 are executed by the CPU provided with the controller Ct7, they will work as in the aforementioned embodiment.

The main video data storage 51c is formed from a large capacity storage unit or the like to capture and store the main video data vdt from an external terminal under the control of the controller Ct7.

Note that the subsequent operations of the video edition control unit P1, compressed video extraction unit P2, video control unit P12, compressed video display signal generator P13, descrambling unit P14, main video data display signal generator P15, billing processor 61 and display unit D are similar to those in the aforementioned embodiment, and so will not be described any longer.

As a result, a preview video can be edited in various modes and displayed. Thus, the user can view the preview video before purchasing the main video data for appreciation and the result of viewing can be a measure to decide whether or not to purchase the main video data for appreciation.

Also when the user decides to purchase the entire main video data for appreciation, the main video data vdt can smoothly be played back and displayed as in the aforementioned embodiments.

For distribution of meta data using a package medium, CD represented by CD-ROM and magneto-optical disc represented by MD as well as optical disc, FD being a magnetic recording disc and R-HD (removable hard disc) are widely used.

As apparent from the above, the present invention can organize a system in which meta data is distributed along with program guide via broadcasting and network to a user's terminal, the user downloads only meta data of a video title which includes a genre or casting in which the user is interested at the terminal and receives and stores coded main video data, views a preview video automatically generated and makes a payment for purchase of the main video data. By viewing the preview video, the user can instinctively select a video title.

Further, by a combination of a copy guard system, scrambling system and a billing system with the present invention, it is possible to partially disclose a preview video edited from a main video data of a video title, which will give an incentive to the user for purchasing the video title, and visually check the preview video carefully before selecting and purchasing the video title, which will promote the sale of each video title on a pay-per-view basis.

Also, by distributing the semantic code concerning the video effect of a main video data as meta data, it is possible to edit a preview video from the same video title for a limited district for example and use it in a worldwide authoring application, for example, in a local broadcasting or as a video package.

Also, the present invention can organize a system in which meta data alone or meta data and video editor can be distributed in an broadcast program introduction or movie introduction as an online information journal for example by an IP (information provider) independent of any broadcasting station via the Internet. A business can be established in which when a video title is purchased by a user by viewing a preview video of the video title in a specific online information journal, a commission is paid to the information journal publisher.

Further, the present invention can organize a system in which meta data are placed along with corresponding main video data at a data center (server), a preview video is automatically generated meeting a requirement upon request for the preview data from a terminal (client) and presented to the terminal via the Internet. This system is advantageously adoptable in a video museum or video library having huge archive information, a video rental shot or its franchise system, etc.

Furthermore, the present invention can provide a public institution with a system to lend and play main video data upon request from a user having viewed its preview video

Also, the present invention can organize a video rental system in which meta data is used for searching a video title upon request from a user, a tape or disc containing a searched video title can immediately be provided to the user or the original video title can be copied for rental to the user.

Moreover, the present invention can organize a video rental franchise system in which all past archival video titles are store din a large capacity data storage unit controlled by a server to reduce the stock of tapes at each franchisee, the preview editor using meta data, ported in the server, is used to generate a moving picture preview video of a video title upon request for the video title from the user, the moving picture preview video is distributed to the user via a network, and the main video data of the video title is served to the terminal of the franchisee when the user having viewed the preview video made a payment for purchase of the video title.

Also, for rental or sale of a video title, a copy guard system to prevent a digital copy and play restriction system to limit the number of times of playback are becoming technically feasible. As the meta data according to the present invention, copy guard control data can be recorded and stored.

As in the above, the present invention provides a system and method for distributing meta data (such as light semantic code) of which data amount is less, instead of distributing a preview video itself, and a system and method for transmitting and receiving meta data along with main video data, meta data along with main video data and video editor or meta data along with video editor. Namely, the present invention can be embodied in a wide variety of modes as having been described in the foregoing.

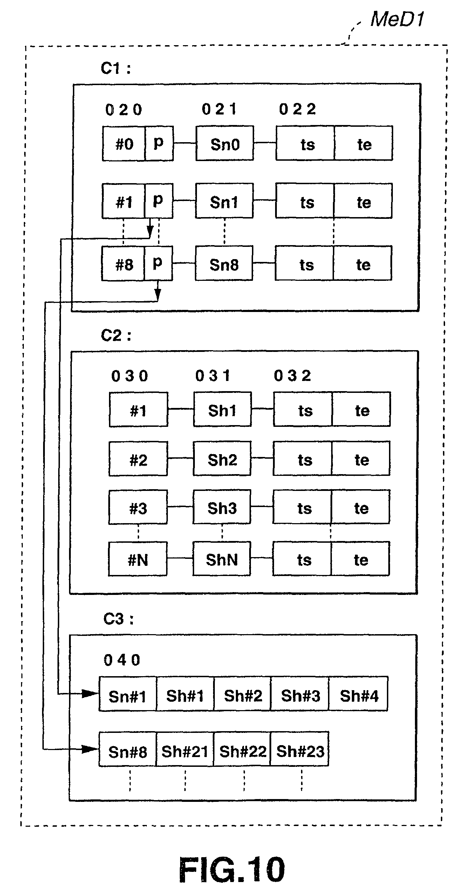

Next, the recording medium according to the present invention will be described with reference to FIG. 10 explaining a computer-readable type recording medium being an eighth embodiment of the present invention, having data recorded therein.

As shown in FIG. 10, the computer-readable type recording medium according to the present invention is generally indicated with a reference MeD1. The recording medium MeD1 has recorded therein as header data and main video data, main video data (not shown) constituted from a plurality of shots or scenes being units of moving picture, consecutively connected to each other in a predetermined sequence, and as a main code C data about the shots or scenes. That is, the recording MeD1 has meta data of the main video data recorded therein.

Further, scene-related data of the main code C is recorded in a scene file area C1, shot-related data is recorded in a shot file area C2, and data related to a correlation between scenes and shots is recorded in a correlation file area C3.

The scene file area C1 has recorded therein an evaluation value item 021 and time code item 022 of each of the scenes in correspondence to a scene number item 020 for the scene and with a pointer appended thereto.

The shot file area C2 has recorded therein an evaluation value item 031 and time code 032 of each of the shots in correspondence to a shot number item 030 for the shot.

The correlation file area C3 has recorded therein link data 040 linking the scene number of each of the scenes to the shot number for each of the shots belonging to the scene.

Further, the pointer p of each scene item 020 in the scene file area C1 is organized to indicate the top address of corresponding link data 040 in the correlation file area C3.

That is, the link data 040 are listed at random, and each time newly set link data 040 is added, existing link data 040 is replaced or removed, the pointer p recorded in the corresponding scene item 020 in the scene file area C1 is updated by addition, replacement or deletion.

The meta data is used as will be described below:

A scene in consideration is searched based on the evaluation value item 021 of each of the scenes in the scene file area C1. When the scene in consideration is detected, reference is made to link data 040 corresponding to the scene in consideration in the correlation file area C3 to confirm shots included in the scene, and the time code of the confirmed shot is acquired from the item 032 in the shot file area C2.

Therefore, because of the above data structure, the pointer p permits to quickly move from the scene file area C1 to the link data 040 corresponding to the scene in consideration in the correlation file area C3.

Further, in the file management, the link data 040 can freely be added or deleted. At each time, the link data 040 may not be sorted. Therefore, it is possible to create or update a file easily and highly efficiently.

The recording medium MeD1 can be embodied as a CD family including CD-ROM, CD-RAM, etc., a magneto-optical recording device family including DVD, MD, etc., flexible magnetic disc, removable magnetic disc, data carrier device such as MemoryStick, etc.

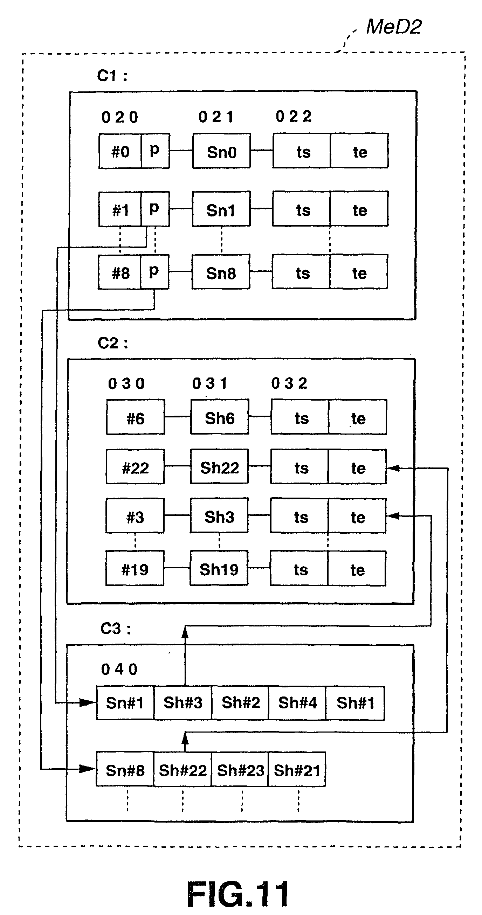

Referring now to FIG. 11, there is explained a computer-readable type recording medium being a ninth embodiment of the present invention, having data recorded therein.

The computer-readable recording medium is generally indicated with a reference MeD2. As shown, the recording medium MeD2 has recorded therein as header data A and main video data B, main video data identification data constituted from a plurality of shots or scenes being units of moving picture, consecutively connected to each other in a predetermined sequence, and as a main code C data about the shots or scenes.

Further, scene-related data of the main code C is recorded in a scene file area C1, shot-related data is recorded in a shot file area C2, and data related to a correlation between scenes and shots is recorded in a correlation file area C3.

The scene file area C1 has recorded therein an evaluation value item 021 and time code item 022 of each of the scenes in correspondence to an item 020 for a scene in consideration. Also a pointer p may be appended to the item 020.

Also the shot file area C2 has recorded therein an evaluation value item 031 and time code item 032 of each of shots in correspondence to an item 030 for a shot in consideration.

Further, the correlation file area C3 has recorded therein a plurality of link data 040 formed by linking together a number for each scene and a number for each scene to which the shot belongs. In this embodiment, when each link data 040 is generated, shots are recorded in the order of sorting based on the evaluation values of the shots. For example, four shots of the link data 040 of the scene number Sn #1 will be recorded in the order of sorting based on their evaluation values (not shown), namely, in the order of Sh #3, Sh #2, Sh #4 and Sh #1.

Since the shot numbers belonging to each scene are listed in the order of sorting based on their evaluation values, when a predetermined number of representative ones are selected from the scenes during use of the meta data, it suffices to extract the predetermined number of shots beginning with the leading one of the sorted ones, whereby the time for selection of shots can be reduced.

The recording medium MeD2 can be embodied as a CD family including CD-ROM, CD-RAM, etc., a magneto-optical recording device family including DVD, MD, etc., data carrier device family including flexible magnetic disc, removable magnetic disc, MemoryStick, etc.

As in the above, the meta data according to the present invention can be distributed via the digital broadcasting or digital broadcasting, by uploading/downloading from a network system such as the Internet, or as recorded in a recording medium including a data carrier device such as MemoryStick, or a package medium optical disc, flexible magnetic disc, etc. Therefore, the meta data can be distributed more widely and inexpensively, which will contribute very much to the industries and cultures.

As having been described in the above, the video data transmitting method and video data transmitter, video data receiving method and vide data receiver, and video data transmitting/receiving method and video data transmission/reception system, according to the present invention permit to transmit and/or receive meta data including at least both data to identify a main video data and predetermined data about each shot or scene composting the main video data, to thereby transmitting/receiving a variety of data concerning the main video data.

Among others, extraction of the data to identify the main video data at the receiving side allows the use to acquire data about the main video data before having not yet viewed the latter.

Also, when the main video data is ready for use at the receiving side, predetermined shots or scenes can be extracted from the main video data can be acquired by referring to the predetermined data about the shots or scenes in the received meta data. By viewing a preview video produced by connecting such extracted shots or scenes, the content of the main video data can be considered before appreciating the main video data.

Further, the meta data itself can be identified based on the main video data identifying data. Therefore, even if a plurality of meta data is transmitted, it is possible to easily confirm desired meta data.

According to the present invention, it is possible to transmit or receive a main video data and meta data simultaneously by transmitting or receiving the main video data to which the meta data is appended. Also, the transmission and reception can be effected more simply.

Thus, the main video data and meta data can easily be made to correspond to each other, whereby there will not take place any confusion with other main video data and meta data. Moreover, upon reception of them, predetermined partial videos can immediately be extracted from the main video data while referring to the simultaneously received meta data.

Furthermore, according to the present invention, main video data, meta data and video editor can be distributed simultaneously by transmitting or receiving the main video data along with the meta data and video editor appended to the main video data. Therefore, at the receiving side as well, the main video data and the meta data and video editor can easily be made to correspond to each other, whereby there will not take place any confusion with other main video data, meta data or video editor. Also the transmission and reception can be done more simply.

Moreover, upon reception of them, predetermined partial videos can immediately be extracted from the received main video data using the received video editor and while referring to the received meta data.

Also, according to the present invention, the meta data can be transmitted or received along with the video editor appended to the mea data, whereby at the transmitting or receiving side as well, the meta data and video editor can easily be made to correspond to each other, whereby there will occur any confusion with other meta data and video editor. Also the transmission and reception can be done more simply.

Further, upon reception of them, predetermined partial video images can immediately be extracted from separately prepared main video data using the received video editor and while referring to the simultaneously received meta data.

As in the above, by transmitting or receiving mete data whose data amount is smaller instead of distributing a preview video, it is possible to automatically play back a preview video from main video data and generate at the receiving side a variety of preview videos per video title, so that the system burden can be smaller than the distribution of the preview video itself and the time and costs for communications can considerably be reduced.

Also, by adopting various transmission and reception paths, that is, various transmission and reception mechanisms, video data including meta data can be distributed inexpensively via various media.

In the computer-readable recording medium, having data recorded therein according to the present invention, shot-related data and scene-related data of a main video data are recorded in a shot-file area and scene file area, respectively, a correlation between the shot and scene is recorded in a correlation file area. In the scene file area, an evaluation value and time code of each of the scenes are recorded in the scene file area in correspondence to a scene number for the scene and with a pointer appended thereto, an evaluation value and time code of each of the shots are recorded in the shot file area in correspondence to a shot number for the shot, link data linking the scene number of each of the scenes to the shot number for each of the shots belonging to the scene is recorded in the correlation file area, and the pointer of each of the scenes in the scene file area indicates the top address of link data recorded in the correlation file area and associated with that pointer. Thus, the pointer permits to quickly move from the scene file area to a scene in consideration in the correlation file area.

Also, in the computer-readable recording medium, having data recorded therein according to the present invention, shot-related data and scene-related data of a main video data are recorded in a shot-file area and scene file area, respectively, a correlation between the shot and scene is recorded in a correlation file area. In the scene file area, an evaluation value and time code of each of the scenes are recorded in the scene file area in correspondence to a scene number for the scene and with a pointer appended thereto, an evaluation value and time code of each of the shots are recorded in the shot file area in correspondence to a shot number for the shot, link data linking the scene number of each of the scenes to the shot number for each of the shots belonging to the scene is recorded in the correlation file area, and the shots are recorded as sorted based on their evaluation values. Thus, since the shot numbers belonging to each scene are listed in the order of sorting based on their evaluation values, when a predetermined number of representative ones are selected from the scenes during use of the meta data, it suffices to extract the predetermined number of shots beginning with the leading one of the sorted ones, whereby the time for selection of shots can be reduced.

## Claims

1. A video data transmitting method in which there is transmitted, via a predetermined transmission path, meta data including at least:
data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and
predetermined data about the shots or scenes.

2. The method as set forth in Claim 1, wherein the data intended to identify the main video data and meta data including at least data by which the predetermined data about the shot or scene is made to correspond to that shot or scene, respectively, are edited based on the main video data, and the meta data is transmitted via the predetermined transmission path.

3. The method as set forth in Claim 1, wherein for transmission of the video title main video data and meta data, the meta data is appended to the main video data, and thus the main video data and meta data are transmitted simultaneously via the predetermined transmission path.

4. The method as set forth in Claim 1, wherein for transmission of the video title main video data and meta data, the meta data and a video editing means having at least a function to extract a predetermined part from the main video data with reference to the meta data, are appended to the main video data, and thus the main video data, meta data and video editing means are transmitted simultaneously via the predetermined transmission path.

5. The method as set forth in Claim 1, wherein for transmission of the video title main video data and meta data, a video editing means having at least a function to extract a predetermined part from the main video data with reference to the meta data, is appended to the meta data, and thus the meta data and video editing means are transmitted simultaneously via the predetermined transmission path.

6. The method as set forth in Claim 1, wherein the predetermined transmission path is at least any one of a radio broadcasting by a radio broadcasting equipment, wire broadcasting by a wire broadcasting equipment, radio network by a radio network equipment and a wire network by a wire network equipment.

7. A video data transmitter comprising:
means for transmitting, via a predetermined transmission mechanism, meta data including at least:
data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and
predetermined data about the shots or scenes.

8. The transmitter as set forth in Claim 7, wherein the transmitting means comprises:
means for editing, based on the main video data, the data intended to identify the main video data and the meta data including at least data by which the predetermined data about the shot or scene is made to correspond to that shot or scene, respectively;
means for transmitting the meta data via the predetermined transmission mechanism.

9. The transmitter as set forth in Claim 7, wherein for transmission of the main video data and meta data, the transmitting means appends the meta data to the main video data, and thus transmits the main video data and meta data simultaneously via the predetermined transmission mechanism.

10. The transmitter as set forth in Claim 7, wherein for transmission of the main video data and meta data, the transmitting means appends to the main video data the meta data and a video editing means having at least a function to extract a predetermined part from the main video data with reference to the meta data, and thus transmits the main video data, meta data and video editing means simultaneously via the predetermined transmission mechanism.

11. The transmitter as set forth in Claim 7, wherein for transmission of the main video data and meta data, the transmitting means appends to the meta data a video editing means having at least a function to extract a predetermined part from the main video data with reference to the meta data, and thus transmits the meta data and video editing means simultaneously via the predetermined transmission mechanism.

12. The method as set forth in Claim 7, wherein the predetermined transmission mechanism is at least any one of a radio broadcasting by a radio broadcasting equipment, wire broadcasting by a wire broadcasting equipment, radio network by a radio network equipment and a wire network by a wire network equipment.

13. A video data receiving method in which there is received, via a predetermined reception path, meta data including at least:
data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and
predetermined data about the shots or scenes.

14. The method as set forth in Claim 13, wherein the main video data is manipulated with reference to the meta data received via the predetermined reception path.

15. The method as set forth in Claim 13, wherein the main video data and meta data are received via the predetermined reception path with the meta data appended to the main video data, and a previously provided video editing means is used to extract a predetermined part from the received main video data with reference to the received meta data.

16. The method as set forth in Claim 13, wherein the main video data and meta data are received simultaneously via the predetermined reception path along with main video data formed by appending to the main video data the meta data and a video editing means having at least a function to extract a predetermined part from the main video data with reference to the meta data, and the video editing means thus received is used to extract a predetermined part from the received main video data with reference to the received meta data.

17. The method as set forth in Claim 13, wherein the main video data and meta data are received via the predetermined reception path with a video editing means having at least a function to extract a predetermined part from the main video data with reference to the meta data, appended to the meta data, and the video editing means thus received is used to extract the predetermined part from the received main video data with reference to the received meta data.

18. The method as set forth in Claim 13, wherein the predetermined reception path is at least any one of a radio broadcasting by a radio broadcasting equipment, wire broadcasting by a wire broadcasting equipment, radio network by a radio network equipment and a wire network by a wire network equipment.

19. The method as set forth in Claim 13, wherein the meta data includes data indicating for which billing is to be done, the main video data, manipulated main video data or the predetermined part extracted from the main video data, and thus the billing is made based on the meta data.

20. A video data receiver comprising means for receiving, via a predetermined reception mechanism, meta data including at least:
data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and
predetermined data about the shots or scenes.

21. The receiver as set forth in Claim 20, further comprising means for manipulating the main video data with reference to the meta data received by the receiving means via the predetermined reception path.

22. The receiver as set forth in Claim 20, further comprising means for a video editing means for extracting a predetermined part from the received main video data with reference to the meta data received by the receiving means via the predetermined reception path.

23. The receiver as set forth in Claim 20, wherein the receiving means further comprising means for receiving the main video data and meta data via a predetermined reception mechanism with the meta data and a video editing means having at least a function to extract a predetermined part from the main video data with reference to the meta data, appended to the main video data, and executing the video editing means received by the receiving means.

24. The receiver as set forth in Claim 20, wherein the receiving means further comprising means for receiving the main video data and meta data via a predetermined reception mechanism with the meta data and a video editing means having at least a function to extract a predetermined part from the main video data with reference to the meta data, appended to the meta data, and executing the video editing means received by the receiving means.

25. The receiver as set forth in Claim 20, wherein the predetermined reception mechanism is at least any one of a radio broadcasting by a radio broadcasting equipment, wire broadcasting by a wire broadcasting equipment, radio network by a radio network equipment and a wire network by a wire network equipment.

26. The receiver as set forth in Claim 20, wherein the meta data includes data indicating for which billing is to be done, the main video data, manipulated main video data or the predetermined part extracted from the main video data, and thus the billing is made based on the meta data.

27. A video data transmitting/receiving method in which:
there are transmitted separately:
a main video data of a video title, constituted by connecting, in a predetermined sequence, a plurality of at least either shots each being the basic unit of a moving picture or scenes each being a unit of the moving picture, including at least such a shot;
data for identification of the main video data; and
meta data including predetermined data related to the shots or scenes of the main video data;
the main video data and meta data are received separately; and
the main video data is manipulated based on the meta data.

28. The method as set forth in Claim 27, wherein for transmission and reception of the main video data and meta data, the meta data is appended to the main video data, the main video data and meta data are transmitted simultaneously via a predetermined transmission/reception path, they are received simultaneously with the meta data appended to the main video data via the predetermined transmission/reception path, and a previously provided video editing means is used to extract a predetermined part from the received main video data with reference to the received meta data.

29. The method as set forth in Claim 27, wherein for transmission and reception of the main video data and meta data, the meta data and a video editing means having at least a function to extract a predetermined part from the main video data with reference to the meta data are appended to the main video data, the main video data and meta data are transmitted simultaneously via a predeterminer transmission/reception path, they are received simultaneously with the meta data and video editing means appended to the main video data via the predetermined transmission/reception path, and the received video editing means is used to extract the predetermined part from the main video data with reference to the received meta data.

30. The method as set forth in Claim 27, wherein for transmission and reception of the main video data and meta data, a video editing means having at least a function to extract a predetermined part from the main video data with reference to the meta data is appended to the meta data, the main video data and meta data are transmitted simultaneously via a predeterminer transmission/reception path, they are received simultaneously with the video editing means appended to the meta data via the predetermined transmission/reception path, and the received video editing means is used to extract the predetermined part from the main video data with reference to the received meta data.

31. The method as set forth in Claim 27, wherein the predetermined transmission/reception path is at least any one of a radio broadcasting by a radio broadcasting equipment, wire broadcasting by a wire broadcasting equipment, radio network by a radio network equipment and a wire network by a wire network equipment.

32. The method as set forth in Claim 27, wherein the meta data includes data indicating for which billing is to be done, the main video data, manipulated main video data or the predetermined part extracted from the main video data, and thus the billing is made based on the meta data.

33. A video data transmission/reception system comprising:
a video data transmitter having means for transmitting, via a predetermined transmission mechanism:
meta data including at least:
data based on a main video data of a video title, constituted by connecting, in a predetermined sequence, a plurality of at least either shots each being the basic unit of a moving picture or scenes each being a unit of the moving picture, including at least such a shot, the data being intended for identification of the main video data; and
predetermined data about the shots or scenes; and
a video data receiver having means for receiving the main video data and meta data via a predetermined reception mechanism.

34. The system as set forth in Claim 33, wherein the transmitter transmits the main video data and meta data separately, and thus the receiver receives the main video data and meta data separately by the receiving means; and
further comprising means for manipulating the main video data based on the meta data received by the receiving means.

35. The system as set forth in Claim 33, wherein for transmission of the video title main video data and meta data, the transmitting means of the transmitter appends the meta data to the main video data and thus transmits the main video data and meta data simultaneously via the predetermined transmission/reception mechanism, and thus the receiver receives the main video data by the receiving means along with the meta data appended to the main video data via the predetermined transmission/reception mechanism; and
further comprising a video editing means having at least a function to extract a predetermined part from the received main video data with reference to the meta data received by the receiving means.

36. The system as set forth in Claim 33, wherein for transmission of the video title main video data and meta data, the transmitting means of the transmitter appends to the main video data the meta data and a video editing means having at least a function to extract a predetermined part from the main video data with reference to the meta data and thus transmits the main video data and meta data simultaneously via the predetermined transmission/reception mechanism, and the receiver receives by the receiving means the main video data and meta data with the meta data and video editing means appended to the main video data via the predetermined transmission/reception path; and
further comprising means for executing the video editing means received by the receiving means.

37. The system as set forth in Claim 33, wherein for transmission of the video title main video data and meta data, the transmitting means of the transmitter appends to the meta data a video editing means having at least a function to extract a predetermined part from the main video data with reference to the meta data and thus transmits the main video data and meta data simultaneously via the predetermined transmission/reception mechanism, and the receiver receives by the receiving means the main video data and meta data with the video editing means appended to the meta data via the predetermined transmission/reception path; and
further comprising means for executing the video editing means received by the receiving means.

38. The system as set forth in Claim 33, wherein the predetermined transmission/reception mechanism is at least any one of a radio broadcasting by a radio broadcasting equipment, wire broadcasting by a wire broadcasting equipment, radio network by a radio network equipment and a wire network by a wire network equipment.

39. The system as set forth in Claim 33, wherein the meta data includes data indicating for which billing is to be done, the main video data, manipulated main video data or the predetermined part extracted from the main video data, and thus the billing is made based on the meta data.

40. An data recording medium of a computer-readable type, having:
predetermined data, recorded as meta data, about a shot being the basic unit of a moving picture, or a scene being a unit of the moving picture, including at least such a shot, of a main video data of a video title constituted by connecting, in a predetermined sequence, a plurality of at least the shots or scenes;
data about at least the scene in the meta data, recorded in a scene file area;
data about the shot, recorded in a shot file area;
data about the correlation between the scene and shot, recorded in a correlation file area;
an evaluation value and time code of each of the scenes, recorded in the scene file area in correspondence to a scene number for the scene and with a pointer appended thereto;
an evaluation value and time code of each of the shots, recorded in the shot file area in correspondence to a shot number for the shot; and
link data linking the scene number of each of the scenes to the shot number for each of the shots belonging to the scene, recorded in the correlation file area;
the pointer of each of the scenes in the scene file area indicating the top address of link data recorded in the correlation file area and associated with that pointer.

41. The data recording medium as set forth in Claim 40, wherein the meta data includes data indicating for which billing is to be done, the main video data, manipulated main video data or the predetermined part extracted from the main video data, and thus the billing is made based on the meta data.

42. A data recording medium of a computer-readable type, having:
predetermined data, recorded as meta data, about a shot being the basic unit of a moving picture, or a scene being a unit of the moving picture, including at least such a shot, of a main video data of a video title, constituted formed by connecting, in a predetermined sequence, a plurality of at least the shots or scenes;
data about at least the scene in the meta data, recorded in a scene file area;
data about the shot, recorded in a shot file area;
data about the correlation between the scene and shot, recorded in a correlation file area;
an evaluation value and time code of each of the scenes, recorded in the scene file area in correspondence to a scene number for the scene;
an evaluation value and time code of each of the shots, recorded in the shot file area in correspondence to a shot number for the shot; and
link data linking the scene number of each of the scenes to the shot number for each of the shots belonging to the scene, recorded in the correlation file area;
the shot being sorted based on the evaluation value of each shot and recorded in each of the link data.

43. The data recording medium as set forth in Claim 42, wherein the meta data includes data indicating for which billing is to be done, the main video data, manipulated main video data or the predetermined part extracted from the main video data, and thus the billing is made based on the meta data.
